(19) Europäisches Patentamt
European Patent Office
Office européen des brevets

(11) Veröffentlichungsnummer: **0 052 266**
**B1**

(12) **EUROPÄISCHE PATENTSCHRIFT**

(45) Veröffentlichungstag der Patentschrift: **11.07.84**

(51) Int. Cl.³: **C 09 B 29/085** // D06P1/04

(21) Anmeldenummer: **81108954.9**

(22) Anmeldetag: **27.10.81**

(54) **Monoazofarbstoffe, Verfahren zu ihrer Herstellung und ihre Verwendung.**

(30) Priorität: **31.10.80 DE 3041013**

(43) Veröffentlichungstag der Anmeldung: **26.05.82 Patentblatt 82/21**

(45) Bekanntmachung des Hinweises auf die Patenterteilung: **11.07.84 Patentblatt 84/28**

(84) Benannte Vertragsstaaten: **BE CH DE FR GB IT LI**

(56) Entgegenhaltungen: **FR - A - 1 388 592**
**FR - A - 1 411 351**

(73) Patentinhaber: **CASSELLA Aktiengesellschaft, Hanauer Landstrasse 526, D-6000 Frankfurt am Main 61 (DE)**

(72) Erfinder: **Bühler, Ulrich, Dr., Nidderauer Strasse 13, *D-6369 Schöneck* 1 (DE)**
Erfinder: **Roth, Kurt, Breckenheimer Strasse 35, D-6238 Hofheim (DE)**

(74) Vertreter: **Urbach, Hans-Georg, Dr. et al, Hanauer Landstrasse 526, D-6000 Frankfurt am Main 61 (DE)**

**EP 0 052 266 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die vorliegende Erfindung betrifft wertvolle, von Carbonsäure- und Sulfonsäure-Gruppen freie Monoazofarbstoffe der Formel I

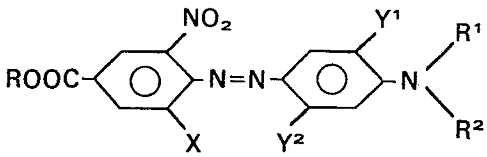
(I)

worin:

R Alkyl mit 1 bis 4 C-Atomen, Hydroxyethyl, Chlorethyl, Bromethyl oder Cyanethyl, Alkyl mit 3 bis 12 C-Atomen, das durch 1 bis 5 Sauerstoffatome unterbrochen ist und durch Hydroxy substituiert sein kann,

X Chlor, Brom oder Cyan,

$Y^1$ unter der Bedingung, dass $Y^2$ für Wasserstoff oder $NHCOR^3$ steht, Wasserstoff, Methoxy, Ethoxy, Methyl, Ethyl, Chlor oder Brom oder unter der Bedingung, dass $Y^2$ für $NHCOR^3$ steht, auch Hydroxyethoxy, Methoxyethoxy oder Ethoxyethoxy, $Y^2$ $NHCOR^3$ oder unter der Bedingung, dass $Y^1$ für Wasserstoff steht, Wasserstoff, Methoxy, Ethoxy, Methyl, Ethyl, Chlor oder Brom,

$R^1$ Alkyl mit 1 bis 4 C-Atomen, das durch Chlor, Brom, Cyan, Hydroxy oder monosubstituiert oder durch Hydroxy oder durch Hydroxy und Chlor oder Brom oder durch Phenoxy und Hydroxy disubstituiert sein kann, Alkenyl mit 3 bis 4 C-Atomen, Cycloalkyl mit 5 oder 6 C-Atomen, Alkyl mit 3 bis 8 C-Atomen, dessen Kohlenstoffketten durch 1 bis 3 Sauerstoffatome unterbrochen ist und durch Hydroxy, Chlor oder Brom ein- oder mehrfach substituiert sein kann, und für den Fall, dass $Y^2$ ungleich $NHCOR^3$ ist, auch Wasserstoff,

$R^2$ Alkyl mit 1 bis 4 C-Atomen, das durch Chlor, Brom, Cyan, Phenoxy oder Hydroxy monosubstituiert oder durch Hydroxy oder durch Hydroxy und Chlor oder Brom oder durch Phenoxy und Hydroxy disubstituiert sein kann, Alkenyl mit 3 bis 4 C-Atomen oder Alkyl mit 3 bis 8 C-Atomen, dessen Kohlenstoffkette durch 1 bis 3 Sauerstoffatome unterbrochen ist und durch Hydroxy, Chlor oder Brom ein- oder mehrfach substituiert sein kann,

$R^3$ Alkyl mit 1 bis 2 C-Atomen, das gegebenenfalls durch Hydroxy, Methoxy oder Ethoxy substituiert ist, bedeuten.

Die Erfindung betrifft auch Verfahren zur Herstellung der Farbstoffe der Formel I sowie ihre Verwendung zum alkalischen Ätzdruck von hydrophoben Fasermaterialien oder ihren Mischungen mit Cellulose.

Von Carbonsäure- bzw. Sulfonsäure-Gruppen freie Monoazofarbstoffe mit p-ständigen Alkoxycarbonylgruppen in der Diazokomponente sind bereits bekannt und ihre Herstellung ist beschrieben: z.B. DE-OS Nrn. 1544388, 1544563, 2011051, 2239133; GB-PS Nrn. 909843, 993162; FR-PS Nrn. 1466675, 1572880, 1582454; BE-PS Nr. 721168 und JP-PS Nr. 3130380.

Diese bekannten Farbstoffe lassen jedoch noch zahlreiche Wünsche der Praxis offen, insbesondere im Hinblick auf die Applikation, bei der sich beispielsweise Mängel im Aufbau- und Ausziehvermögen, in der Temperatur-, pH- und Reduktions-Empfindlichkeit, aber auch im Hinblick auf die Echtheiten der Färbungen, wie Licht-, Trockenhitzefixier-, Wasch-, Reib- und Wasserechtheiten und nicht zuletzt auf die Kosten der Färbung unter Berücksichtigung der Farbstärke zeigen. Die Farbstoffe der vorliegenden Erfindung tragen überraschenderweise den Bedürfnissen der Praxis in weit höherem Masse Rechnung als die bisher bekannten.

Es wurde überraschenderweise gefunden, dass sich die erfindungsgemässen Farbstoffe, insbesondere diejenigen mit der Bedeutung R = Alkyl mit 1 bis 4 C-Atomen, Hydroxyethyl, Methoxyethyl, Chlorethyl, Bromethyl oder Cyanethyl ganz besonders zur Verwendung im alkalischen Ätzdruck auf Textilmaterialien, die hydrophobe Fasern, vorzugsweise Polyesterfasern, in überwiegendem Mass enthalten oder aus solchen Fasern bestehen, eignen. Der alkalische Ätzdruck ist ein Verfahren zur Herstellung von Ätzreservedrucken, wobei auf das Textilmaterial ein weissätzbarer Farbstoff und gegebenenfalls ein ätzmittelbeständiger Farbstoff in Form einer Farbflotte oder Druckpaste aufgebracht und danach getrocknet oder angetrocknet wird und anschliessendes Aufdrucken einer Ätzreservepaste, die gegebenenfalls neben Ätzmitteln noch ätzmittelbeständige Farbstoffe enthält, in dem gewünschten Muster und anschliessende Wärmebehandlung bei Temperaturen von 100 bis 230° C.

Aus der FR-A Nrn. 1388592 und 1411352 sind zwar ähnliche wasserunlösliche Farbstoffe bekannt, doch ist diesen Patentschriften kein Hinweis darauf zu entnehmen, dass sich die bekannten Farbstoffe für den alkalischen Ätzdruck eignen. Die vorliegende Erfindung wird daher durch die beiden genannten französischen Patentschriften nicht nahegelegt.

Alkyl- und Alkenylreste können geradkettig oder verzweigt sein.

Für R, $R^1$ oder $R^2$ können z.B. folgende Alkylreste stehen: Methyl, Ethyl, n-Propyl-, i-Propyl, n-Butyl, i-Butyl, sek.-Butyl. Für R, $R^1$ oder $R^2$ können beispielsweise ferner stehen: 2-Chlor-, 2-Brom- oder 2-Cyanethyl; für $R^1$ oder $R^2$ können beispielsweise ferner stehen: 2- oder 3-Chlor-, -Brom- oder -Cyanpropyl; 2-, 3- oder 4-Chlor-, -Brom- oder -Cyanbutyl; 2,3-Dihydroxypropyl, 2-Hydroxy-3-chlorpropyl; Hydroxyethyl, 2- oder 3-Hydroxy, Hydroxypropyl-2, 2-, 3- oder 4-Hydroxybutyl, 1-, 3- oder 4-Hydroxybutyl-2; Allyl; Methallyl, Crotyl; Methoxy-, Ethoxy-, Propoxy- oder Butoxyethyl, -prop-3-yl, -but-4-yl, -but-3-yl oder -but-2-yl; Hydroxyethoxy-, Methoxyethoxy-, Propoxyethoxy-, Butoxyethoxyethyl, -prop-3-yl, -but-4-yl, -but-3-yl oder -but-2-yl, Hydroxyethoxyethoxyethyl, -prop-3-yl, -but-4-yl, -but-3-yl, -but-2-yl, Methoxyethoxyethoxyethyl, -prop-3-yl, Propoxyethoxyethoxyethyl, 2,3-Dihydroxypropoxyethyl, -prop-3-yl, -butyl-4-yl, -but-3-yl, -but-2-yl, 2-Hydroxy-3-chlorpropoxyethyl, 2-Hydroxy-3-methoxypropyl, 2-Hydroxy-3-ethoxypropyl, 2-Hydroxy-3-butoxypropyl, 2-Hydroxy-3-methoxyethoxypropyl, 2-Hydroxy-3-ethoxyethoxypropyl, 2-Hydroxy-3-(3-methoxypropoxy)propyl, 2-Hydroxy-3-(4-methoxybutoxy)propyl, Pehnoxyethyl, -prop-3-yl, -but-4-yl, -but-3-yl oder -but-2-yl.

Für $R^1$ können darüber hinaus z.B. stehen: 2-Hydroxy-3-phenoxypropyl und Cyclohexyl und Cyclopentyl.

Für $R^3$ können beispielsweise stehen: Methyl, Ethyl, n-Propyl, i-Propyl, Chlormethyl oder 2-Chlorethyl, Bromethyl oder 2-Bromethyl, Hydroxy-, Methoxy- oder Ethoxymethyl oder 2-Hydroxy-, 2-Methoxy-, 2-Ethoxyethyl oder 3-Hydroxypropyl.

Weitere Beispiele für R-Substituenten sind Reste der Formeln $-(CH_2CH_2O)_mCH_3$, $-(CH_2CH_2O)_mC_2H_5$, $-(CH_2CH_2O)_mH$, worin m eine ganze Zahl von 1 bis 5 bedeutet. Die für R stehenden Alkylreste mit 3 bis 12 C-Atomen, die durch 1 bis 5 Sauerstoffatome unterbrochen sind, sind für den Fall ihrer Substitution durch Hydroxy vorzugsweise am Ende substituiert.

Bevorzugte R Reste sind: Alkyl mit 1 bis 3 C-Atomen, Methoxyethyl und Ethoxyethyl.

Bevorzugte $R^1$ oder $R^2$ Reste enthalten mindestens eine OH-Gruppe; besonders bevorzugte $R^1$ oder $R^2$ Reste sind Hydroxyethyl und 2,3-Dihydroxypropyl.

Bevorzugte $R^3$ Reste sind: Methyl, Ethyl, Hydroxyethyl, Methoxyethyl und Ethoxyethyl.

Bevorzugt sind Farbstoffe, in denen X für Brom oder für die Fälle, dass $Y^1 = Y^2 = H$ oder $Y^1$ = Methoxy, Ethoxy, Hydroxyethoxy, Methoxyethoxy, Ethoxyethoxy und $Y^2 = NHCOR^3$ ist, auch für Cyan steht.

Bevorzugt sind ferner Farbstoffe, in denen $Y^1$ für Wasserstoff und $Y^2$ für Wasserstoff, Methyl, Methoxy, Chlor oder Brom steht, sowie Farbstoffe, in denen $Y^2$ für Wasserstoff und $Y^1$ für Methyl, Methoxy, Chlor oder Brom steht.

Bevorzugt sind weiter Farbstoffe,in denen $Y^1$ für Wasserstoff und $Y^2$ für $NHCOR^3$ steht, ferner Farbstoffe, in denen $Y^1$ für Chlor, Brom, Methyl oder Ethyl und $Y^2$ für $NHCOR^3$ steht, sowie Farbstoffe, in denen $Y^1$ für Methoxy, Ethoxy, Hydroxyethoxy, Methoxyethoxy und Ethoxyethoxy und $Y^2$ für $NHCOR^3$ steht.

Ganz besonders bevorzugt sind Farbstoffe, die eine Kombination bevorzugter Merkmale aufweisen, wie beispielsweise die Farbstoffe der folgenden Formeln

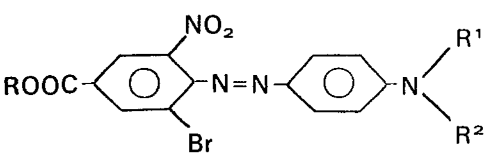
(Ia)

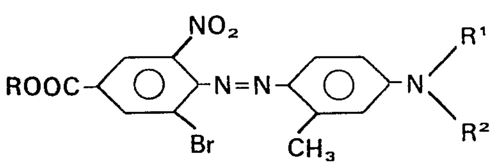
(Ib)

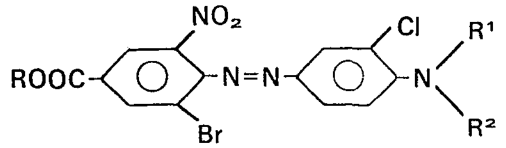
(Ic)

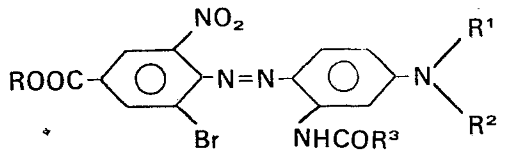
(Id)

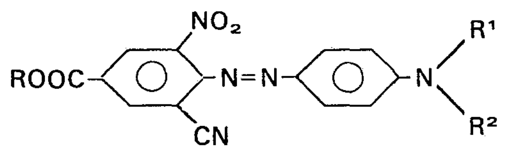
(Ie)

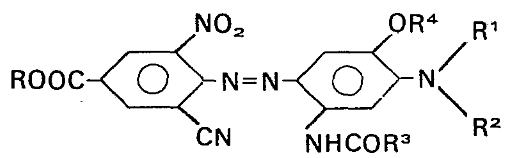
(If)

wobei R, $R^1$, $R^2$ und $R^3$ insbesondere die bereits genannten bevorzugten Bedeutungen besitzen und $R^4$ Methyl, Ethyl, Hydroxyethyl, Methoxyethyl oder Ethoxyethyl bedeutet. Die erfindungsgemässen Farbstoffe lassen sich herstellen, indem man ein Amin der Formel II diazotiert und auf ein Amin der Formel III kuppelt

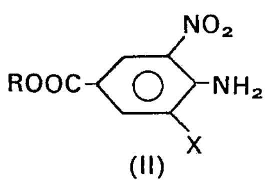
(II)

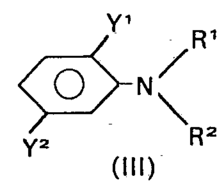
(III)

Die Diazotierung des Amins der Formel II geschieht in an sich bekannter Weise durch Einwirkung von salpetriger Säure oder salpetrige Säure abspaltenden Verbindungen. Beispielsweise können die Amine in Schwefelsäure, Salzsäure oder in niederen aliphatischen Carbonsäuren, wie z.B. Essigsäure oder Propionsäure, gelöst werden und bei 0 bis 60° C durch Zusatz von Nitrosylschwefelsäure bzw. Natriumnitrit diazotiert werden. Die Kupplung wird im sauren wässerigen Medium, in einer niederen aliphatischen Carbonsäure, wie z.B. Essigsäure, die gegebenenfalls mit Wasser verdünnt ist, bzw. in einer Mischung aus Wasser und einem in Wasser wenig löslichen Alkohol, wie n- oder i-Butanol, bei Temperaturen von 0 bis 30° C ausgeführt. Bevorzugt wird hierbei der Temperaturbereich von 0 bis 15° C. Zur Vervollständigung der Kupplungsreaktion kann es zweckmässig sein, den pH-Wert des Kupplungsansatzes am Anfang oder gegen Ende der Reaktion durch Zusatz von Basen, wie z.B. von Natriumacetat, auf einen Wert von 3 bis 6 zu puffern. Die Isolierung des Farbstoffs erfolgt in der üblichen Weise durch Filtration.

Beispiele für Amine der Formel II sind 3-Nitro-4-amino-5-chlor-(oder 5-brom)benzoesäure-methyl-, -ethyl-, -n-propyl-, -i-propyl-, -n-butyl-,

-i-butyl-, -sek.-butyl-, -tert.-butyl-, -hydroxyethyl-, -methoxyethyl-, -ethoxyethyl-, hydroxyethoxyethyl-, -methoxyethoxyethyl-, ethoxyethoxyethyl-, -hydroxyethoxyethoxyethyl-, methoxyethoxyethoxyethyl-, -ethoxyethoxyethoxyethyl-, methoxyethoxyethoxyethoxyethyl-ester. Die Amine der Formel II können z.B. hergestellt werden, indem man 3-Nitro-4-aminobenzoesäure mit einem Alkohol ROH verestert, wie z.B. in Liebigs „Ann. Chem.", *371*, 168 (1905) beschrieben, und anschliessend in einem organischen Lösungsmittel, wie Eisessig, oder in Schwefelsäure bei einer Temperatur zwischen 30 und 150° C mit molekularem Brom oder Chlor zum Amin der Formel II, in der X Halogen bedeutet, umsetzt.

Selbstverständlich kann zur Herstellung der Amine der Formel II, in der X Halogen bedeutet, 3-Nitro-4-aminobenzoesäure auch zuerst bromiert bzw. chloriert und dann erst verestert werden. Zur Herstellung der 3-Nitro-4-amino-5-halogenbenzoesäuren kann auch von 3-Nitro-4-acetaminobenzoesäure ausgegangen werden, die nach der Halogenierung verseift wird. Grundsätzlich können auch alle als Vor- oder Zwischenprodukte eingesetzten Benzoesäureester durch Umesterung erhalten werden. Dazu wird der sich von einem niedrigsiedenden Alkohol R'OH ableitende Benzoesäureester mit einem Alkohol ROH, der zweckmässigerweise höher siedet, zum gewünschten Benzoesäureester umgesetzt, wobei der frei werdende niedrigsiedende Alkohol R'OH während der Umsetzung zweckmässigerweise abdestilliert wird. Die Umesterung kann dabei durch Basen oder Säuren katalysiert werden, wie es z.B. in C. Weygang, G. Hilgetag: „Organisch-chemische Experimentierkunst", Verlag J.A. Barth, Leipzig, (1970), S. 385, und dort zitierter Literatur beschrieben wird.

Ferner lassen sich die Amine der Formel II, in der X Halogen bedeutet, herstellen, indem man 3-Chlor-4-aminobenzoesäure oder 3-Chlor-4-acetaminobenzoesäure, die in „J. Amer. Chem. Soc.", *66*, 1631 (1944) beschrieben sind, bzw. 3-Brom-4-aminobenzoesäure oder 3-Brom-4-acetaminobenzoesäure, die in „Rec. Trav. Chim.", *53*, 7 (1934) beschrieben sind, nitriert und dann mit dem Alkohol ROH verestert oder zuerst verestert und dann nitriert. Die Nitrierung kann in einem organischen Lösungsmittel, wie Essigsäure, oder z.B. in Schwefelsäure unter Verwendung von Salpetersäure oder eine Mischung aus Salpetersäure und Schwefelsäure erfolgen.

Darüber hinaus lassen sich die Amine der Formel II, in der X Brom bedeutet, ausgehend von 3,4-Dibrom-5-nitrobenzoesäure, die in „J. Chem. Soc.", 1942, 504, beschrieben ist, durch Umsetzung mit Ammoniak in einem organischen Lösungsmittel oder in Wasser und anschliessender Veresterung herstellen, oder aber, indem man den 3,4-Dibrom-5-nitrobenzoesäureester direkt mit Ammoniak umsetzt.

Die Kupplungskomponenten der Formel III sind bekannt bzw. lassen sich nach bekannten Verfahren herstellen. Beispiele für geeignete Kupplungskomponenten sind in der Tabelle I angegeben.

Die Farbstoffe der Formel I mit X = Cyan werden aus den Farbstoffen der Formel I, in der X für Chlor oder Brom, vorzugsweise für Brom, steht, in an sich bekannter Weise durch nukleophilen Austausch des Chlors oder Broms gegen Cyan hergestellt. Diese nukleophile Austauschreaktion kann z.B. nach den Angaben der DE-PS Nrn. 1809920, 1809921, der GB-PS Nr. 1184825, der DE-AS Nr. 1544563, der DE-OS Nr. 2310745, der DE-AS Nrn. 2456495, 2610675, der DE-OS Nrn. 2724116, 2724117, 2834137, 2341109, der US-PS Nr. 3821195, der DE-OS Nrn. 2715034 oder 2134896 erfolgen, wobei als nukleophiles Agenz des Cyanidion $CN^{\ominus}$ eingesetzt wird. Der Austausch von Chlor oder Brom gegen Cyan kann aber auch so durchgeführt werden, dass als Cyanoverbindung ein kovalentes nichtmetallisches Nitril oder eine unter den jeweiligen Reaktionsbedingungen ein solches Nitril bildende Substanz verwendet und die Umsetzung in Gegenwart eines Säureakzeptors durchgeführt wird, wobei als Katalysator eine Kupferverbindung dient, wie es z.B. in der DE-OS Nr. 2913072 beschrieben ist.

Tabelle I

Kupplungskomponenten der Formel

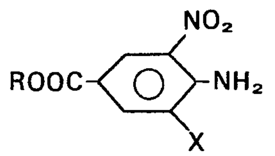

(II)

| $Y^1$ | $Y^2$ | $R^1$ | $R^2$ |
|---|---|---|---|
| H | H | $CH_3$ | $CH_3$ |
| H | H | $C_2H_5$ | $C_2H_5$ |
| H | H | n-$C_4H_9$ | n-$C_4H_9$ |
| H | H | H | i-$C_3H_7$ |
| H | H | H | i-$C_4H_9$ |
| H | H | $(CH_2)_2OH$ | $C_2H_5$ |
| H | H | $(CH_2)_2OH$ | n-$C_4H_9$ |
| H | H | $(CH_2)_4OH$ | |

Tabelle I *(Fortsetzung)*

| $Y^1$ | $Y^2$ | $R^1$ | $R^2$ |
|---|---|---|---|
| H | H | $(CH_2)_4OH$ | $C_2H_5$ |
| H | H | $(CH_2)_2Cl$ | $C_2H_5$ |
| H | H | $(CH_2)_4Br$ | $CH_3$ |
| H | H | $(CH_2)_2CN$ | $C_2H_5$ |
| H | H | $(CH_2)_2CN$ | $n-C_4H_9$ |
| H | H | $(CH_2)_2CN$ | $i-C_3H_7$ |
| H | H | $(CH_2)_4CN$ | $CH_3$ |
| H | H | $(CH_2)_2OC_6H_5$ | $C_2H_5$ |
| H | H | $CH_2CH(OH)CH_2OH$ | $C_2H_5$ |
| H | H | $CH_2CH(OH)CH_2Cl$ | $C_2H_5$ |
| H | H | $CH_2CH=CH_2$ | $CH_3$ |
| H | H | $CH_2CH=CHCH_3$ | $n-C_4H_9$ |
| H | H | $CH_2CH(OH)CH_2Cl$ | $C_2H_5$ |
| H | H | $(CH_2)_2O(CH_2)_2OH$ | $C_2H_5$ |
| H | H | $(CH_2)_2O(CH_2)_2OC_2H_5$ | $CH_3$ |
| H | H | $CH_2CH(OH)CH_2OCH_3$ | $CH_3$ |
| H | H | $CH_2CH(OH)CH_2O(CH_2)_2OCH_3$ | $C_2H_5$ |
| H | H | $(CH_2)_2OH$ | $(CH_2)_2OH$ |
| H | H | $(CH_2)_3OH$ | $(CH_2)_3OH$ |
| H | H | $(CH_2)_2CN$ | $(CH_2)_2CN$ |
| H | H | $CH_2CH=CH_2$ | $CH_2CH=CH_2$ |
| H | H | $CH_2CH(OH)CH_2Cl$ | $CH_2CH(OH)CH_2Cl$ |
| H | H | $(CH_2)_2O(CH_2)_2OH$ | $(CH_2)_2O(CH_2)_2OH$ |
| H | H | $(CH_2)_2O(CH_2)_2OCH_3$ | $(CH_2)_2O(CH_2)_2OCH_3$ |
| H | H | $(CH_2)_2O(CH_2)_2O(CH_2)_2OH$ | $(CH_2)_2O(CH_2)_2O(CH_2)_2OH$ |
| H | H | $(CH_2)_2OC_2H_5$ | $(CH_2)_2OC_2H_5$ |
| H | H | $CH_2CH(OH)CH_2OCH_3$ | $CH_2CH(OH)CH_2OCH_3$ |
| H | H | $(CH_2)_2CN$ | $(CH_2)_2OH$ |
| H | H | $(CH_2)_2CN$ | $(CH_2)_2O(CH_2)_2OH$ |
| H | H | $(CH_2)_2CN$ | $CH_2CH=CH_2$ |
| H | H | $(CH_2)_2CN$ | $(CH_2)_2OCH_3$ |
| H | H | $(CH_2)_2CN$ | $CH_2CH(OH)CH_2Cl$ |
| H | H | $(CH_2)_2CN$ | $CH_2CH(OH)CH_2OC_2H_5$ |
| H | H | $CH_2CH=CH_2$ | $(CH_2)_2OH$ |
| H | H | $CH_2CH=CH_2$ | $CH_2CH(OH)CH_2Cl$ |
| H | H | $CH_2CH=CH_2$ | $(CH_2)_4O(CH_2)_4OCH_3$ |
| H | H | $CH_2CH=CH_3$ | $C_2H_5$ |
| H | H | $(CH_2)_2OH$ | $(CH_2)_2O(CH_2)_2OCH_3$ |
| H | $CH_3$ | $C_2H_5$ | $C_2H_5$ |
| H | $CH_3$ | H | $i-C_3H_7$ |
| H | $CH_3$ | $(CH_2)_2OH$ | $CH_3$ |
| H | $CH_3$ | $(CH_2)_2OH$ | $n-C_3H_7$ |
| H | $CH_3$ | $(CH_2)_2CN$ | $C_2H_5$ |
| H | $CH_3$ | $(CH_2)_2CN$ | $n-C_4H_9$ |
| H | $CH_3$ | $(CH_2)_2OCH_3$ | $C_2H_5$ |
| H | $CH_3$ | $CH_2CH(OH)CH_2OH$ | $CH_3$ |
| H | $CH_3$ | $(CH_2)_2O(CH_2)_2OH$ | $C_2H_5$ |
| H | $CH_3$ | $(CH_2)_2O(CH_2)OC_2H_5$ | $CH_3$ |
| H | $CH_3$ | $CH_2CH(OH)CH_2OCH_3$ | $C_2H_5$ |
| H | $CH_3$ | $CH_2CH=CH_2$ | $C_2H_5$ |
| H | $CH_3$ | $(CH_2)_2OH$ | $(CH_2)_2OH$ |
| H | $CH_3$ | $(CH_2)_2CN$ | $(CH_2)_2CN$ |
| H | $CH_3$ | $CH_2CH=CH_2$ | $CH_2CH=CH_2$ |
| H | $CH_3$ | $CH_2CH(OH)CH_2Cl$ | $CH_2CH(OH)CH_2Cl$ |
| H | $CH_3$ | $(CH_2)_2O(CH_2)_2OH$ | $(CH_2)_2O(CH_2)_2OH$ |
| H | $CH_3$ | $(CH_2)_2O(CH_2)_2OCH_3$ | $(CH_2)_2O(CH_2)_2OCH_3$ |
| H | $CH_3$ | $(CH_2)_2OC_6H_5$ | $(CH_2)_2OC_6H_5$ |
| H | $CH_3$ | $(CH_2)_2CN$ | $(CH_2)_2OH$ |
| H | $CH_3$ | $(CH_2)_2CN$ | $(CH_2)_4OCH_3$ |
| H | $CH_3$ | $(CH_2)_2CN$ | $(CH_2)_2O(CH_2)_2OH$ |

Tabelle I *(Fortsetzung)*

| $Y^1$ | $Y^2$ | $R^1$ | $R^2$ |
|---|---|---|---|
| H | $CH_3$ | $(CH_2)_2CN$ | $CH_2CH(OH)CH_2Cl$ |
| H | $CH_3$ | $(CH_2)_2CN$ | $CH_2CH(OH)CH_2OH$ |
| H | $CH_3$ | $CH_2CH{=}CH_2$ | $CH_3$ |
| H | $CH_3$ | $CH_2CH{=}CH_2$ | $(CH_2)_2CN$ |
| H | $CH_3$ | $CH_2CH{=}CH_2$ | $(CH_2)_2OH$ |
| H | $CH_3$ | $(CH_2)_2OH$ | $C_6H_{11}$ |
| H | $CH_3$ | $(CH_2)_2OH$ | $(CH_2)_4O(CH_2)_2OH$ |
| H | $C_2H_5$ | $(CH_2)_2OH$ | $C_2H_5$ |
| H | $C_2H_5$ | $(CH_2)_2CN$ | $(CH_2)_2OH$ |
| H | $C_2H_5$ | $(CH_2)_2CN$ | $CH_2CH(OH)CH_2Cl$ |
| H | $C_2H_5$ | $(CH_2)_2OH$ | $(CH_2)_2OH$ |
| H | $C_2H_5$ | $(CH_2)_2O(CH_2)_2OCH_3$ | $(CH_2)_2O(CH_2)_2OCH_3$ |
| H | $OCH_3$ | $C_2H_5$ | $C_2H_5$ |
| H | $OCH_3$ | H | $i\text{-}C_4H_9$ |
| H | $OCH_3$ | $(CH_2)_2OH$ | $C_2H_5$ |
| H | $OCH_3$ | $(CH_2)_4Cl$ | $CH_3$ |
| H | $OCH_3$ | $(CH_2)_2CN$ | $n\text{-}C_3H_7$ |
| H | $OCH_3$ | $CH_2CH(OH)CH_2Cl$ | $C_2H_5$ |
| H | $OCH_3$ | $(CH_2)_2OH$ | $(CH_2)_2OH$ |
| H | $OCH_3$ | $(CH_2)_2CN$ | $(CH_2)_2OH$ |
| H | $OCH_3$ | $(CH_2)_2CN$ | $CH_2CH(OH)CH_2OH$ |
| H | $OCH_3$ | $(CH_2)_2CN$ | $(CH_2)_2O(CH_2)_4OH$ |
| H | $OCH_3$ | $CH_2CH(OH)CH_2Cl$ | $(CH_2)_2OH$ |
| H | $OCH_3$ | $(CH_2)_2O(CH_2)_2OCH_3$ | $(CH_2)_2O(CH_2)_2OCH_3$ |
| H | Cl | $n\text{-}C_3H_7$ | $n\text{-}C_3H_7$ |
| H | Cl | $CH_2CH{=}CHCH_3$ | $CH_2CH{=}CH{-}CH_3$ |
| H | Cl | H | $C_5H_9$ |
| H | Cl | $(CH_2)_2OH$ | $(CH_2)_2OH$ |
| H | Cl | $(CH_2)_2OH$ | $C_2H_5$ |
| H | Cl | $CH_2CH(OH)CH_2Cl$ | $C_2H_5$ |
| H | Cl | $(CH_2)_2CN$ | $(CH_2)_2OH$ |
| H | Cl | $(CH_2)_2CN$ | $CH_2CH(OH)CH_2OH$ |
| H | Cl | $(CH_2)_2CN$ | $CH_2CH{=}CH_2$ |
| H | Cl | $(CH_2)_2O(CH_2)_2O(CH_2)_2OH$ | $(CH_2)_2O(CH_2)_2O(CH_2)_2OH$ |
| Cl | H | H | $(CH_2)_2CN$ |
| Cl | H | H | $(CH_2)_2OH$ |
| Cl | H | H | $(CH_2)_2O(CH_2)_2OCH_3$ |
| Cl | H | H | $CH_2CH(OH)CH_2OH$ |
| Cl | H | H | $C_2H_5$ |
| Cl | H | H | $i\text{-}C_3H_7$ |
| Cl | H | H | $CH_2CH{=}CH_2$ |
| Cl | H | $(CH_2)_2CN$ | $(CH_2)_2OH$ |
| Cl | H | $(CH_2)_2CN$ | $(CH_2)_2OCH_2CH(OH)CH_2Cl$ |
| Cl | H | $(CH_2)_2OH$ | $C_2H_5$ |
| Br | H | H | $(CH_2)_2CN$ |
| $CH_3$ | H | H | $i\text{-}C_3H_7$ |
| $CH_3$ | H | H | $(CH_2)_2CN$ |
| $CH_3$ | H | H | $CH_2CH(OH)CH_2OH$ |
| $CH_3$ | H | $(CH_2)_2OH$ | $(CH_2)_2OH$ |
| $CH_3$ | H | $(CH_2)_2OH$ | $(CH_2)_2CN$ |
| $C_2H_5$ | H | H | $i\text{-}C_4H_9$ |
| $C_2H_5$ | H | H | $(CH_2)_2CN$ |
| $C_2H_5$ | H | H | $CH_2CH(OH)CH_2O(CH_2)_2OC_2H_5$ |
| $C_2H_5$ | H | $(CH_2)_2O(CH_2)_2OCH_3$ | $(CH_2)_2O(CH_2)_2OCH_3$ |
| $OCH_3$ | H | H | $(CH_2)_2CN$ |
| $OCH_3$ | H | H | $CH_2CH(OH)CH_2Cl$ |
| $OCH_3$ | H | $(CH_2)_2OH$ | $(CH_2)_2CN$ |
| $OCH_3$ | H | H | $(CH_2)_2OH$ |
| $OCH_3$ | H | H | $(CH_2)_2Cl$ |
| $OC_2H_5$ | H | $C_2H_5$ | $OC_2H_5$ |

Tabelle I *(Fortsetzung)*

| $Y^1$ | $Y^2$ | $R^1$ | $R^2$ |
|---|---|---|---|
| $OC_2H_5$ | H | H | $(CH_2)_2CN$ |
| H | $NHCOCH_3$ | $C_2H_5$ | $C_2H_5$ |
| H | $NHCOCH_3$ | $(CH_2)_2OH$ | $C_2H_5$ |
| H | $NHCOCH_3$ | $(CH_2)_2CN$ | $C_2H_5$ |
| H | $NHCOCH_3$ | $(CH_2)_2CN$ | $CH_2CH{=}CH_2$ |
| H | $NHCOCH_3$ | $(CH_2)_2OC_6H_5$ | $CH_3$ |
| H | $NHCOCH_3$ | $CH_2CH(OH)CH_2Cl$ | $C_2H_5$ |
| H | $NHCOCH_3$ | $CH_2CH{=}CH_2$ | $C_2H_5$ |
| H | $NHCOCH_3$ | $C_6H_{11}$ | $n\text{-}C_4H_9$ |
| H | $NHCOCH_3$ | $(CH_2)_2O(CH_2)_2OH$ | $C_2H_5$ |
| H | $NHCOCH_3$ | $(CH_2)_2OH$ | $(CH_2)_2OH$ |
| H | $NHCOCH_3$ | $(CH_2)_2CN$ | $(CH_2)_2CN$ |
| H | $NHCOCH_3$ | $CH_2CH{=}CH_2$ | $CH_2CH{=}CH_2$ |
| H | $NHCOCH_3$ | $(CH_2)_2OCH_3$ | $(CH_2)_2OCH_3$ |
| H | $NHCOCH_3$ | $(CH_2)_2O(CH_2)_2OH$ | $(CH_2)_2O(CH_2)_2OH$ |
| H | $NHCOCH_3$ | $(CH_2)_2CN$ | $(CH_2)_2OH$ |
| H | $NHCOCH_3$ | $(CH_2)_2CN$ | $CH_2CH{=}CH_2$ |
| H | $NHCOCH_3$ | $(CH_2)_2CN$ | $CH_2CH(OH)CH_2Cl$ |
| H | $NHCOCH_3$ | $(CH_2)_2CN$ | $CH_2CH(OH)CH_2OCH_3$ |
| H | $NHCOCH_3$ | $(CH_2)_2CN$ | $(CH_2)_2O(CH_2)_2OC_2H_5$ |
| H | $NHCOC_2H_5$ | $C_2H_5$ | $C_2H_5$ |
| H | $NHCOC_2H_5$ | $(CH_2)_2OH$ | $(CH_2)_2OH$ |
| H | $NHCOC_2H_5$ | $(CH_2)_2CN$ | $(CH_2)_2OH$ |
| H | $NHCOC_2H_5$ | $(CH_2)_2CN$ | $CH_2CH(OH)CH_2Cl$ |
| H | $NHCOC_2H_5$ | $(CH_2)_2CN$ | $CH_2CH{=}CH_2$ |
| H | $NHCOC_2H_5$ | $(CH_2)_4OCH_3$ | $(CH_2)_4OCH_3$ |
| $OCH_3$ | $NHCOCH_3$ | $C_2H_5$ | $C_2H_5$ |
| $OCH_3$ | $NHCOCH_3$ | $(CH_2)_2OH$ | $C_2H_5$ |
| $OCH_3$ | $NHCOCH_3$ | $(CH_2)_2OH$ | $i\text{-}C_4H_9$ |
| $OCH_3$ | $NHCOCH_3$ | $(CH_2)_2CN$ | $n\text{-}C_3H_7$ |
| $OCH_3$ | $NHCOCH_3$ | $CH_2CH(OH)CH_2Cl$ | $C_2H_5$ |
| $OCH_3$ | $NHCOCH_3$ | $(CH_2)_2CN$ | $CH_2CH{=}CH_2$ |
| $OCH_3$ | $NHCOCH_3$ | $CH_2CH{=}CH_2$ | $CH_2CH{=}CH_2$ |
| $OCH_3$ | $NHCOCH_3$ | $(CH_2)_2OCH_3$ | $CH_3$ |
| $OCH_3$ | $NHCOCH_3$ | $(CH_2)_2OH$ | $(CH_2)_2OH$ |
| $OCH_3$ | $NHCOCH_3$ | $(CH_2)_2O(CH_2)_2OH$ | $(CH_2)_2O(CH_2)_2OH$ |
| $OCH_3$ | $NHCOCH_3$ | $(CH_2)_2O(CH_2)_2OC_2H_5$ | $(CH_2)_2O(CH_2)_2OC_2H_5$ |
| $OCH_3$ | $NHCOCH_3$ | $CH_2CH(OH)CH_2OC_2H_5$ | $(CH_2)_2OH$ |
| $OCH_3$ | $NHCOCH_3$ | $(CH_2)_2OC_6H_5$ | $(CH_2)_2OH$ |
| $OCH_3$ | $NHCOCH_3$ | $(CH_2)_2CN$ | $(CH_2)_2OH$ |
| $OCH_3$ | $NHCOCH_3$ | $(CH_2)_2CN$ | $(CH_2)_2O(CH_2)_2OC_2H_5$ |
| $OCH_3$ | $NHCOCH_3$ | $(CH_2)_2CN$ | $CH_2H(OH)CH_2OH$ |
| $OCH_3$ | $NHCOCH_3$ | $(CH_2)_2CN$ | $CH_2CH(OH)CH_2O(CH_2)_2OCH_3$ |
| $OCH_3$ | $NHCOCH_3$ | $(CH_2)_2CN$ | $(CH_2)_4Cl$ |
| $OCH_3$ | $NHCOCH_3$ | $CH_2CH(OH)CH_2Cl$ | $CH_2CH(OH)CH_2Cl$ |
| $OC_2H_5$ | $NHCOCH_3$ | $C_2H_5$ | $C_2H_5$ |
| $OC_2H_5$ | $NHCOCH_3$ | $(CH_2)_2CN$ | $(CH_2)_2OH$ |
| $OC_2H_5$ | $NHCOCH_3$ | $(CH_2)_2OH$ | $(CH_2)_2OH$ |
| $OC_2H_5$ | $NHCOCH_3$ | $(CH_2)_2O(CH_2)_2OC_2H_5$ | $(CH_2)_2O(CH_2)_2OC_2H_5$ |
| $(CH_2)_2OH$ | $NHCOCH_3$ | $(CH_2)_2CN$ | $(CH_2)_2OH$ |
| $(CH_2)_2OCH_3$ | $NHCOCH_3$ | $C_2H_5$ | $(CH_2)_2OH$ |
| $OCH_3$ | $NHCOC_2H_5$ | $(CH_2)_2OH$ | $(CH_2)_2CN$ |
| $OCH_3$ | $NHCOC_2H_5$ | $(CH_2)_2OH$ | $(CH_2)_2CN$ |
| $OCH_3$ | $NHCOCH_2OH$ | $(CH_2)_2OH$ | $(CH_2)_2OH$ |
| $OCH_3$ | $NHCOCH_2OCH_3$ | $(CH_2)_2CN$ | $(CH_2)_2O(CH_2)_2OC_2H_5$ |
| $OCH_3$ | $NHCOCH_2OCH_3$ | $C_2H_5$ | $C_2H_5$ |
| $OCH_3$ | $NHCOCH_2OCH_3$ | $(CH_2)_2OH$ | $(CH_2)_2OH$ |
| $OCH_3$ | $NHCOCH_2OC_2H_5$ | $(CH_2)_2OH$ | $(CH_2)_2OH$ |
| $CH_3$ | $NHCOCH_3$ | $(CH_2)_2CN$ | $(CH_2)_2OH$ |
| Cl | $NHCOCH_3$ | $(CH_2)_2OH$ | $(CH_2)_2OH$ |

Tabelle I *(Fortsetzung)*

| $Y^1$ | $Y^2$ | $R^1$ | $R^2$ |
|---|---|---|---|
| Cl | $NHCOCH_3$ | $(CH_2)_2CN$ | $(CH_2)_2OH$ |
| Cl | $NHCOCH_3$ | $(CH_2)_2CN$ | $C_2H_5$ |

Als Lösungsmittel für die nukleophile Cyanid-Austauschreaktion werden inerte organische Lösungsmittel, wie z.B. Nitrobenzol oder Glycol- oder Diglycolmonomethyl oder -monoethyläther oder Mischungen solcher Lösungsmittel untereinander und mit tertiären organischen Stickstoffbasen, dipolare aprotische Lösungsmittel, wie z.B. methylpyrrolidon, Pyridin, Dimethylformamid oder Dimethylsulfoxid, Dicyan-dialkylthioäther, Wasser oder wässerige Systeme, bestehend aus Wasser und einem mit Wasser unmischbaren (z.B. Nitrobenzol) organischen Lösungsmittel, vorzugsweise in Gegenwart eines Netz- bzw. Dispergiermittels oder eines bekannten Phasentransferkatalysators oder aus Wasser und einem wasserlöslichen, inerten organischen Lösungsmittel, wie Äthylenglycol oder Dimethylformamid, eingesetzt.

Günstig auf die Austauschreaktion wirkt sich auch die Anwesenheit von organischen, basichen Stickstoffverbindungen, wie z.B. Pyridin und Pyridinbasen, aus.

Die Reaktionstemperaturen liegen normalerweise zwischen 20 und 150° C. Das nucleophile Agenz $CN^{\ominus}$ wird in Form eines gegebenfalls komplexen Metallcyanids, wie z.B. eines Alkali- oder Erdalkalicyanids, Zinkcyanids, Alkylicyanozinkats oder -ferrats, vorzugsweise aber in Form von Kupfer-I-cyanid oder eines Kupfer-I-cyanid ausbildenden Systems zugefügt. Besonders bewährt ist der Einsatz einer Kombination von Alkalicyanid mit Kupfer-I-cyanid, wobei das Mengen-Verhältnis von Alkali und Kupfersalz in weiten Grenzen variiert werden kann. Der gängige Bereich des Alkalicyanid/Kupfer-I-cyanid-Verhältnisses liegt bei 5:95 bis 95:5. Auch ausserhalb dieser Grenzen ist noch die positive gegenseitige Beeinflussung der Komponenten feststellbar. Selbstverständlich ist es auch möglich, das Kupfer-I-cyanid seinerseits durch ein Kupfer-I-cyanid ausbildendes System, wie z.B. eine Kombination von Alkalicyanid mit einem anderen Kupfersalz, vorzugsweise Kupfer-I-salz, wie z.B. einem Kupfer-I-halogenid, zu ersetzen.

Die erfindungsgemässen Farbstoffe eignen sich allein oder in Mischung untereinander oder in Mischung mit Farbstoffen anderer Farbstoffklassen insbesondere zum Färben und Bedrucken von hydrophoben Fasermaterialien, wie beispielsweise Polyamid, Cellulose-2½-acetat, Cellulosetriacetat und insbesondere Polyestermaterialien, z.B. Polyethylenglykolterephthalat. Sie liefern hierauf nach üblichen Färbe- und Druckverfahren farbstarke, orangefarbene bis blaue Färbungen und Drucke mit sehr guten Echtheitseigenschaften, insbesondere Licht-, Trockenhitzefixier-, Wasch-, Wasser- und Reibechtheiten.

Das Färben der genannten Fasern, die einzeln oder im Gemisch mit anderen Faserarten, wie z.B. Baumwolle, regenerierten Cellulosefasern oder Wolle vorliegen können, mit den erfindungsgemässen Farbstoffen erfolgt zweckmässig aus wässeriger Suspension in Gegenwart von Carriern zwischen etwa 80 bis 100° C, in Abwesenheit von Carriern zwischen etwa 110 bis 140° C sowie nach dem sogenannten Thermofixierverfahren bei etwa 180 bis 230° C. Das Bedrucken der genannten Materialien kann so durchgeführt werden, dass die mit den neuen Farbstoffen bedruckte Ware in Gegenwart eines Carriers bei Temperaturen zwischen etwa 80 bis 110° C oder auch in Abwesenheit eines Carriers bei etwa 110 bis 180° C gedämpft oder auch nach dem sogenannten Thermofixierverfahren bei etwa 180 bis 230° C behandelt wird.

Der erfindungsgemässen Farbstoffe eignen sich auch zum Färben der vorstehend aufgeführten hydrophoben Materialien aus organischen Lösungsmitteln und zum Färben in der Masse.

Die erfindungsgemässen Farbstoffe, insbesondere diejenigen mit der Bedeutung R = Alkyl mit 1 bis 4 C-Atomen, Hydroxyethyl, Methoxyethyl, Chlorethyl, Bromethyl oder Cyanethyl, eignen sich darüberhinaus auch besonders zur Herstellung von Ätzreservedrucken nach dem alkalischen Ätzreservedruckverfahren.

Die Durchführung dieser Verfahren erfolgt in an sich bekannter Weise durch Klotzen der Textilmaterialien mit Farbflotten, die einen oder mehrere Farbstoffe der Formel I neben den bekannten üblichen Färbereihilfsmitteln, wie beispielsweise Dispergiermitteln, Netzmitteln, Schaumdämpfungsmitteln und Klotzhilfsmitteln, enthalten, und Abquetschen der geklotzten Gewebebahnen auf eine Flottenaufnahme von 50 bis 120%. Anschliessend werden die Gewebebahnen durch Warmluff mit eventueller vorausgehender Infrarotstrahlung getrocknet, wobei die Temperatur ca. 80 maximal etwa 90° C bei entsprechender Verkürzung der Zeit beträgt. Die so vorbereiteten Gewebebahnen werden dann mit einer Ätzreservedruckpaste bedruckt, die als Ätzmittel eine Bae, die in 5%iger wässeriger Lösung einen pH-Wert von mindestens 8 hervorbringt, sowie die in Druckpasten für den Textildruck üblichen bekannten Zusatzstoffe, insbesondere Verdickungsmittel, enthält. Anschliessend werden die geklotzten und bedruckten Gewebebahnen einer Wärmebehandlung zwischen 100 und 230° C unterworfen. Im unteren Temperaturbereich von etwa 100 bis 110° C erfolgt die Wärmezufuhr vorzugsweise durch überhitzten Wasserdampf. Für Wärmebehandlungen, die zwischen 160 und 230° C durchgeführt werden, wird als Wärmeträger vorzugsweise Heissluft

verwendet. Nach der Hitzebehandlung, die eine Fixierung der Dispersionsfarbstoffe sowie die Zerstörung der Farbstoffe der Formel I an den mit der Ätzreservedruckpaste bedruckten Stellen zur Folge hat, werden die Textilien in der für Polyester üblichen Art und Weise nachbehandelt, heiss und kalt gespült und getrocknet. Eine besondere Ausführungsform des Ätzdruckverfahrens besteht darin, dass die Klotzflotte ausser Farbstoffen der Formel I zusätzlich solche enthält, die alkalibeständig sind und somit durch die einzusetzenden alkalischen Ätzreservedruckpasten nicht zerstört werden. Verfährt man im übringen wie oben angegeben, so erhält man mehrfarbige Dessins. Eine weitere Ausführungsform des Verfahrens besteht darin, dass man die Farbstoffe der Formel I nicht durch Klotzen mit einer Klotzflotte auf dem gesamten Gewebe appliziert, sondern ebenfalls in Form von Druckpasten auf das Gewebe aufdruckt und anschliessend mit der Ätzreservedruckpaste überdruckt. Fixierung und Fertigstellung der Textildrucke erfolgt dann anschliessend wie oben bereits beschrieben. Auch bei diesem Verfahren ist es möglich, den als erstes aufgedruckten Farbdruckpasten Farbstoffe zuzusetzen, die alkaliresistent sind. Auch in diesem Falle werden mehrfarbige Dessins erhalten. Eine weitere Möglichkeit zur Durchführung des erfindungsgemässen Verfahrens besteht darin, dass auf den mit Farbstoffen der Formel I geklotzten oder bedruckten Fond Ätzreservedruckpasten aufgedruckt werden, die ihrerseits alkaliresistente Farbstoffe enthalten. Bei anschliessender Fixierung und Fertigstellung der Textilmaterialien, wie oben beschrieben, werden auch hier mehrfarbige Dessins erhalten.

Die Farbstoffe der Formel I liegen in den Klotzflotten bzw. in den Druckpasten in fein dispergierter Form vor, wie es für Dispersionsfarbstoffe üblich und bekannt ist. Auch die Herstellung der Klotzflotten bzw. Druckpasten, die erfindungsgemäss einzusetzen sind, erfolgt in an sich bekannter Weise durch Mischen der Flotten- bzw. Druckpastenbestandteile mit der nötigen Menge Wasser und flüssigen feindispersen oder festen redispergierbaren Einstellungen der Farbstoffe der Formel I.

Alkaliresistente Dispersionsfarbstoffe, die zur Herstellung von mehrfarbigen Dessins mit dem Farbstoff der Formel I kombiniert werden können, sind die bekannten Handelsfarbstoffe aus der Gruppe der Azo- oder Azomethin-, Chinophthalon-, Nitro- oder Anthrachinonfarbstoffe. Einige Beispiele für alkaliresistente Dispersionsfarbstoffe sind

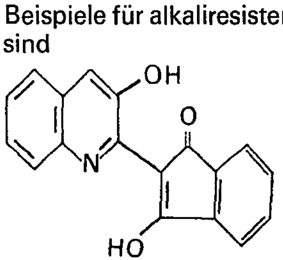,

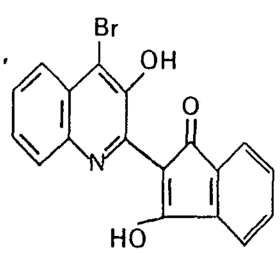,

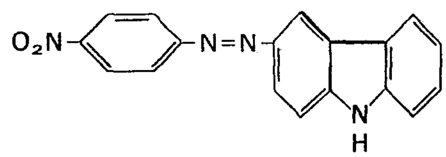,

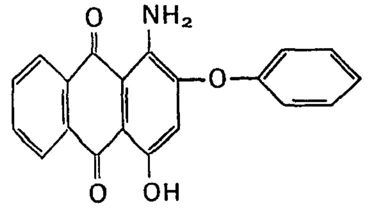,

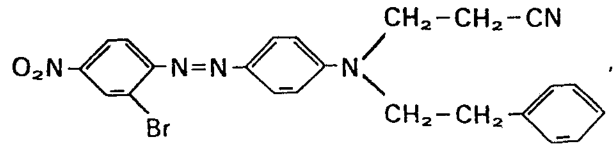,

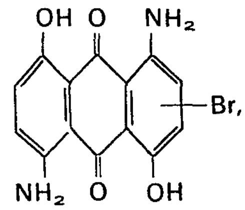

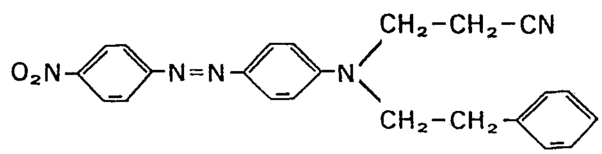

Basen, die als Ätzmittel in der Ätzreservedruckpaste enthalten sind und die in 5%iger wässeriger Lösung mindestens einen pH-Wert von 8 hervorbringen, sind in grosser Zahl bekannt. Beispiele für solche Basen sind die Hydroxide der Alkali- und Erdalkalimetalle, Salze von Erdalkali- und Alkalimetallen mit schwachen organischen oder anorganischen Säuren, wie z.B. Alkaliacetat, Alkalicarbonate oder -bicarbonate, Trialkaliphosphate, Ammoniak oder auch aliphatische Amine, wie z.B. Triethyl-, Tripropyl- oder Tributylamin, Ethanolamin, Dimethyl- oder Diethylethanolamin, Diethanolamin, Dimethyl- oder Diethylethanolamin, Diethanolamin, Methyl-, Ethyl- oder Propyldiethanolamin oder Triethanolamin. Üblicherweise werden als Basen Erdalkalihydroxide, wie z.B. Calciumhydroxid, Alkalihydroxide, wie beispielsweise Natrium- oder Kaliumhydroxid, oder Alkalisalze von schwachen anorganischen Säuren, wie beispielsweise Natriumcarbonat oder Trinatriumphosphat, eingesetzt. Vorzugsweise wird als Base in den Ätzreservedruckpasten Natrium- oder Kaliumhydroxid oder insbesondere Natrium- oder Kaliumcarbonat oder Natrium- oder Kaliumbicarbonat verwendet. Auch Mischungen verschiedener Basen können verwendet werden. Die Konzentration der Base in den Ätzreservedruckpasten beträgt zweckmässigerweise 25 bis 250 g/kg, vorzugsweise 50 bis 130 g/kg. Die Ätzreservedruckpasten enthalten neben den genannten Basen die üblichen, in Textildruckpasten enthaltenen Zusätze, insbesondere Verdickungsmittel, wie z.B. Alginate, Stärkeprodukte, synthetische polymere Verdickungsmittel, Mineralöle, hydrotrope Subtanzen, wie beispielsweise Harnstoff, sowie Zusätze, welche die Benetzung, Durchdringung und Farbstoffaufnahme fördern. Besonders günstig für den Ätzvorgang ist die Anwesenheit nichtionogener Detergenzien, die zweckmässigerweise in den Ätzreservedruckpasten enthalten sind, wie z.B. Glycerin und/oder Polyglykole, wie Polyäthylenglykol mit einem mittleren Molekulargewicht von 300 bis 400.

Nach dem beschriebenen alkalischen Ätzdruckverfahren lassen sich Ätzreservedrucke nicht nur auf Textilmaterialien aufbringen, die aus hydrophoben Fasern, insbesondere Polyesterfasern, bestehen oder solche Fasern überwiegend enthalten, sondern auch auf Textilmaterialien, die hyrophobe Fasern, insbesondere Polyesterfasern, und Cellulosefasern in vergleichbaren Mengenverhältnissen enthalten. Derartige Polyester/Cellulose-Mischgewebe können z.B. ein Gewichtsverhältnis Polyester/Cellulose von 75:25, 65:35 oder 50:50 aufweisen. Das Aufbringen von Ätzreservedrucken auf derartige Mischgewebe nach dem genannten Verfahren ist dann möglich, wenn die Farbflotte oder Druckpaste, welche mindestens einen weissätzbaren Dispersionsfarbstoff der Formel I und gegebenenfalls noch einen oder mehrere ätzmittelbeständige Dispersionsfarbstoffe enthält, ausserdem noch mindestens einen ätzbaren Reaktivfarbstoff mit einem reaktiven Rest der Formel

$$-SO_2-CH_2-CH_2-Hal \quad (IV) \text{ oder}$$
$$-SO_2-CH_2-CH_2-O-SO_3X \quad (V) \text{ oder}$$
$$-NH-SO_2-CH_2-CH_2-OSO_3X \quad (VI) \text{ oder}$$
$$-SO_2-CH=CH_2 \quad (VII)$$

worin X Wasserstoff oder ein Metallkation, insbesondere das Natriumkation, und Hal Halogen, besondere Chlor oder Brom, bedeuten, und gegebenenfalls einen oder mehrere ätzbeständige Reaktivfarbstoffe enthält und wenn die Ätzreservedruckpaste neben Alkalicarbonat oder Alkalihydrogencarbonat ein Alkalisulfit oder Alkalihydrogensulfit und gegebenenfalls einen Aldehyd enthält und wenn im übrigen wie bereits angegeben gearbeitet wird.

Die einzusetzenden ätzbaren Reaktivfarbstoffe enthalten einen der oben angegebenen faserreaktiven Reste der Formeln V bis VII. Den Resten der Formeln IV bis VI ist es gemeinsam, dass sie in Gegenwart von Alkali unter Abspaltung eines Sulfat- oder Halogenidanions eine Vinylsulfonylgruppe ausbilden. Diese in Gegenwart von Alkali gebildete Gruppe fixiert auf Baum- oder Zellwolle in gleicher Weise wie der direkt an den Farbstoffrest gebundene Vinylsulfonylrest der Formel VII durch Addition einer OH-Gruppe der Cellulose an die Vinyldoppelbindung. Ätzbare Reaktivfarbstoffe, die einen der oben genannten reaktiven Reste aufweisen, können allen technisch wichtigen Farbstoffgruppen angehören. Als Beispiele für geeignete Reaktivfarbstoffe werden die Monoazofarbstoffe CI-Yellow 13 bis 17 und 72 bis 74, -Orange 7, 15, 16, 23, 24, 55, -Red 21 bis 23, 35, 36, 50, 63, 103 bis 107, 112 bis 114, -Blue 28, -Brown 16; die Disazofarbstoffe CI-Blue 76, -Blue 98, -Black 5, 31; die Mono- bzw. Disazo-Metallkomplex-Farbstoffe CI-Violet, 4, 5, -Blue 20, -Brown 18; die Anthrachinonfarbstoffe CI-Violet 22, Blue 19 und 27; die Phthalocyaninfarbstoffe CI-Blue 21, 38, 77, 91 und -Green 14 genannt. Besonders bevorzugt sind als ätzbare Reaktivfarbstoffe solche, die als Reaktivanker mindestens einen Faserreaktiven Rest der Formel IV oder VI enthalten.

Die Mengen der Dispersions- und Reaktivfarbstoffe, die bei der Behandlung von Mischgeweben in den Klotzflotten oder Druckpasten enthalten sind, werden wie üblich auf die Farbtiefe der gewünschten Färbung und Intensität des Reaktiveffekts abgestimmt. Ausserdem entspricht die Mengen der für eine der beteiligten Faserarten geeigneten Farbstoffe auch dem Massen-Anteil dieser Faserart an der gesamten Fasermasse. So enthält z.B. eine Klotzflotte, die für eine Fondfärbung bestimmter Farbnuance zubereitet wird, im Fall, dass das Mischgewebe überwiegend Cellulosefasern enthält, einen hohen Anteil an ätzbaren und gegebenenfalls nicht ätzbaren Reaktivfarbstoffen und einen niedrigen Anteil ätzbarer und gegebenenfalls nicht ätzbarer Dispersionsfarbstoffe und im Fall, dass das Substrat überwiegend Polyesterfasern enthält, einen hohen Anteil oder nur Dispersionsfarbstoffe und einen niedrigen Anteil oder keine Reaktivfarbstoffe.

Falls bei der Durchführung des Ätzdruckverfahrens die Klotzflotte oder Druckpaste neben einem oder mehreren ätzbaren Dispersionsfarbstoffen der Formel I auch einen oder mehrere ätzbare Reaktivfarbstoffe mit reaktiven Resten der Formeln II bis V enthält, wird eine Ätzreservedruckpate verwendet, die neben Alkalicarbonat oder Alkalihydrogencarbonat noch ein Alkalisulfit oder Alkalihyrogensulfit als Reservierungsmittel für die Reaktivfarbstoffe enthält. Das Alaklihydrogensulfit kann auch durch eine äquivalente Menge eines Alkalihydrogensulfit-Aldehydadduktes ganz oder teilweise ersetzt werden. Es ist möglich, dieses Addukt in der Reservepaste selbst zu erzeugen, indem man der Reservepaste Alkalihydrogensulfit, Alkalihydrogencarbonat und einen Aldehyd zusetzt. Als Alkalisulfit, Alkalihydrogensulfit und Alkalihydrogencarbonat sind für den technischen Einsatz insbesondere die Natrium- oder Kaliumsalze, vorzugsweise die Natriumsalze, geeignet. Als Aldehyde, die als Alkalihydrogensulfitaddukte in den Reservepasten enthalten sein können, kommen prinzipiell alle technisch gut zugänglichen, wie z.B. Formaldehyd, Acetaldehd, Glyoxal, Benzaldehyd, in Betracht. Da die Aldehyd-Alaklihydrogensulfitaddukte mit den Einzelkomponenten des Addukts im Gleichgewicht stehen, sind solche Aldehyde bevorzugt, die im freien Zustand keinen zu hohen Dampfdruck aufweisen und somit nicht Anlass zu Geruchsbelästigungen geben können. Besonders geeignet ist für den erfindungsgemässen Einsatz beispielsweise Glyoxal.

Besondere Vorteile bei der Zubereitung von Druckpasten, die Natriumhydrogensulfit in Kombination mit einem Aldehyd enthalten, bietet der Einsatz von separat hergestellten Additionsverbindungen dieser beiden Komponenten. So lässt sich beispielsweise durch den Einsatz eines solchen Addukts das lästige Schäumen, das bei der Herstellung von Alkalihydrogencarbonat enthaltenden Druckpasten in ungünstigen Fällen auftreten kann, vermeiden. Die Konzentration der Summer der Reservierungsmittel in den Druckpasten beträgt zweckmässigerweise 25 bis 250 g/kg, vorzugsweise 50 bis 130 g/kg.

Die Verfahrensschritte bei der Herstellung von Ätzreservedrucken auf Polyester/Cellulose-Mischgeweben sind, abgesehen von der anderen Zusammensetzung der Klotzflotte oder Druckpaste und der Ätzreservedruckpaste, die gleichen wie bei der Behandlung von Geweben, die aus Polyester ist es bei der Herstellung von Ätzreservedrukken auf Polyester/Cellulose-Mischgewebe nach dem Klotzen bzw. Bedrucken des Gewebes, Trocknen oder Antrocknen and anschliessendem Überdrucken mit der Ätzreservedruckpaste zweckmässig, die geklotzten und bedruckten textilen Flächengebilde einer Wärmebehandlung zwischen 100 und 190° C zu unterwerfen und dabei die Wärmezufuhr vorzugsweise durch überhitzten Wasserdampf vorzunehmen. Die Hitzebehandlung bewirkt a) an den mit der Ätzreservedruckpaste bedruckten Stellen eine Inhibierung der ätzbaren Dispersions- und Reaktivfarbstoffe und eine Fixierung der gegebenenfalls vorhandenen, nicht reservierbaren Dispersions- und Reaktivfarbstoffe, b) an den nicht mit Ätzreservedruckpaste bedruckten Stellen eine Fixierung der Dispersionsfarbstoffe und, sofern die Klotzsflotte oder Druckpaste ein Alkaliformiat enthalten hat, auch gleichzeitig eine Fixierung der Reaktivfarbstoffe. Hierbei ist unter Inhibierung des Farbstoffs die durch das Reservierungsmittel hervorgerufene Änderung des Farbstoffmoleküls zu verstehen, die dazu führt, dass der betreffende Farbstoff das Substrat nicht mehr anfärbt. Bei dem Zweiphasen-Verfahren, d.h. sofern die Klotzflotte oder Druckpaste kein Alkaliformiat enthalten hat, erfolgt anschliessend die Fixierung der Reaktivfarbstoffe in der Fondfärbung, d.h. an den nicht mit Ätzreservedruckpaste bedruckten Stellen, in an sich bekannter Weise. Zum Schluss werden die Färbungen bzw. Drucke auf den Mischgeweben heiss und kalt gespült und getrocknet.

Die Klotzflotte oder Druckpaste kann ausser ätzbaren Dispersions- und Reaktivfarbstoffen zusätzlich ätzbeständige Dispersions- und Reaktivfarbstoffe enthalten, die somit durch die Ätzreservedruckpasten nicht zerstört werden. Verfährt man im übrigen wie oben angegeben, so erhält man mehrfarbige Dessins. Eine weitere Möglichkeit zur Durchführung des Ätzdruckverfahrens bei Mischgeweben besteht darin, dass auf den mit reservierbaren Farbstoffen geklotzten oder bedruckten Fond Ätzreservedruckpasten aufgedruckt werden, die ihrerseits gegen das Reservierungsmittel resistente Dispersions- und Reaktivfarbstoffe enthalten. Bei anschliessender Fixierung und Fertigstellung der Textilmaterialien, wie oben beschrieben, werden auch hier mehrfarbige Dessins erhalten.

Gegen das Reservierungsmittel beständige Reaktivfarbstoffe, die zur Herstellung von mehrfarbigen Dessins auf Polyester/Cellulose-Mischgeweben mit den ätzbaren Reaktivfarbstoffen kombiniert werden können, sind die bekannten Handelsfarbstoffe aus der Gruppe der Azo- oder Azomethin-, Chinophthalon-, Nitro- oder Anthrachinonfarbstoffe, die als faserreaktiven Rest einen aus der Klasse der Triazine, Chinoxaline, Phthalazine, Pyridazine, Pyrimidine oder der α,β-ungesättigten aliphatischen Carbonsäuren enthalten. Stellvertretend für die gesamte Klasse seien im folgenden die wichtigsten Verbindungen genannt, von denen sich die faserreaktiven Reste der gegen das Ätzmittel beständigen Reaktivfarbstoffe ableiten: Cyanurchlorid, Cyanurbromid, Cyanurfluorid, Dihalogenmonoaminotriazine, wie 2,6-Dichlor-4-aminotriazin, 2,6-Dichlor-4-methylamino-triazin, 2,6-Dichlor-4-oxätylaminotriazin, 2,6-Dichlor-4-phenylaminotriazin, 2,6-Dichlor-4-(o-, m- oder p-sulfophenyl)aminotriazin, Dihalogenalkoxy- und -aryloxy-sym.-triazine, Tetrahalogenpyrimidine, 2,4,6-Trihalogenpyrimidine, Derivate heterocyclischer Carbon- oder Sulfonsäuren, wie 3,6-Dichlorpyridazin-4-carbonsäurechlorid, 2,4-Dichlorpyrimidin-5-carbonsäurechlorid, 2,4,6-Trichlorpyrimidin-5-carbonsäurechlorid, 4,5-Dichlor-6-pyridazonylpropionylchlorid, 1,4-Dichlorphthalazin-6-carbonsäurechlorid, 5,6-Dichlor-4-methyl-2-methylsulfonylpyrimidin, 2- oder 3-Monochlorchinoxalin-6-carbonsäurechlorid oder -6-sulfonsäurechlorid, 2,3-Dichlorchinoxaline-6-carbonsäurechlorid oder -6-sulfonsäurechlorid, 1,4-Dichlorphthalazin-6-carbonsäurechlorid oder -6-sulfonsäurechlorid, 2,4-Dichlorchinazolin-6- oder -7-carbonsäurechlorid oder -sulfonsäurechlorid, 2-Chlorbenzthiazol-5- oder -6-carbonsäurechlorid oder -5- oder -6-sulfonsäurechlorid, 2-Methylsulfonyl- oder 2-Äthylsulfonyl- oder 2-Phenylsulfonylbenzthiazol-5- oder -6-sulfonsäurechlorid, Acrylsäurechlorid und 3-Chlorpropionsäurechlorid.

Die folgenden Ausführungsbeispiele veranschaulichen die Herstellung der erfindungsgemässen Farbstoffe und Möglichkeiten zu ihrer Anwendung. Wenn nichts anderes angegeben, bedeuten dabei Teile Gewichtsteile und Prozente Gewichtsprozente.

*Beispiel 1:*

a) 29,0 g 3-Nitro-4-amino-5-brombenzoesäureethylester werden in 100 ml Eisessig bei 15 bis 20° C mit 34,2 g 41%iger Nitrosylschwefelsäure diazotiert und bei 10 bis 15° C auf 20,9 g N-Cyanethyl-N-hydroxyethylanilin in 400 ml 50%iger Essigsäure in Gegenwart 1 g Aminosulfonsäure gekuppelt. Der ausgefallene Farbstoff wird abgesaugt, mit Wasser neutral gewaschen und getrocknet. Er besitzt die folgende Strukturformel

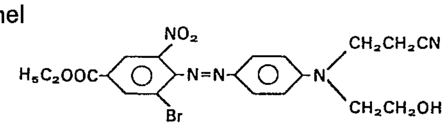

b) 20,0 g des im Abschnitt a) hergestellten Farbstoffs werden in feiner Verteilung einer Druckpaste, die 45,0 g Johannisbrotkernmehl, 6,0 g 3-nitrobenzolsulfonsäures Natrium und 3,0 g Zitronensäure auf 1000 g enthält, einverleibt. Mit dieser Druckpaste erhält man auf einem Polyestergewebe nach dem Bedrucken, Trocknen und Fixieren im Thermofixierrahmen während 45 s bei 215° C, Spülen und Fertigstellung einen farbstarken roten Druck von sehr guten coloristischen Eigenschaften, insbesondere einer sehr guten Licht- und Trockenhitzefixierechtheit.

*Beispiel 2:*

a) Wird die im Beispiel 1 hergestellte Diazolösung bei 0 bis 5° C auf eine Lösung von 21,4 g N,N-Dihydroxyethyl-m-toluidin in 400 ml 50%iger Essigsäure in Gegenwart von 66 g wasserfreiem Natriumacetat und 1 g Aminosulfonsäure gekuppelt, so lässt sich, wie im Beispiel 1 angegeben, ein Farbstoff isolieren, der die folgende Strukturformel besitzt

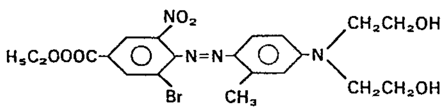

b) 30 Teile der in Abschnitt a) hergestellten Farbstoffe werden in feiner Verteilung zu einer Klotzflotte gegeben, die 905 Teile Wasser, 5 Teile Citronensäure und 60 Teile eines Polymerisationsprodukts auf Acrylsäurebasis als Antimigrationsmittel auf 1000 Teile enthält. Mit dieser Klotzflotte wird ein Gewebe aus Polyester auf der Basis von Polyethylenglykolterephthalat bei 20 bis 30° C mit einem Abquetscheffekt von ca. 80% geklotzt. Das geklotzte Gewebe wird bei 60 bis 80° C vorsichtig getrocknet. Nach dem Trocknen wird mit einer Druckpaste, die 500 Teile einer wässerigen 10%igen Johanniskernmehlätherverdickung, 260 Teile Wasser, 80 Teile calciniertes Natriumcarbonat, 80 Teile Polyethylenglykol, 400 und 80 Teile Glycerin auf 1000 Teile enthält, überdruckt. Nach dem Fixieren mit überhitztem Dampf während 7 min bei 175° C, reduktivem Nachbehandeln, Seifen, anschliessendem Spülen und Trocknen erhält man einen roten Druck mit sehr guten Echtheiten, vor allem guter Licht-, Trockenhitzefixier-, Reib- und Waschechtheit. An den Stellen, auf die die sodahaltige Druckpaste aufgedruckt wird, erhält man einen sehr guten Weissfond mit scharfen Konturen.

*Beispiel 3:*

a) Wird die im Beispiel 1 hergestellte Diazolösung auf eine Lösung von 39,2 g 2-N,N-Bis-hydroxyethyl-4-acetaminophenetol in 900 ml 50%iger Essigsäure in Gegenwart von 1 g Aminosulfonsäure gekuppelt, so entsteht ein Farbstoff der Polyester in violetten Tönen färbt.

65,7 g des so erhaltenen Farbstoffs werden in 150 ml Dimethylformamid, die einen Komplex aus 9,0 Kupfer-I-cyanid und 1,0 g Natriumcyanid enthalten, eingetragen. Nach Abklingen der Selbsterwärmung wird eine halbe Stunde bei 70 bis 75° C nachgerührt. Dann lässt man auf Raumtemperatur abkühlen, isoliert den angefallenen Farbstoff durch Filtration, wäscht mit 100 ml Dimethylformid, mit Wasser, 5%igem wässerigem Ammoniak und wieder mit Wasser und trocknet.

Der Farbstoff besitzt die folgende Strukturformel:

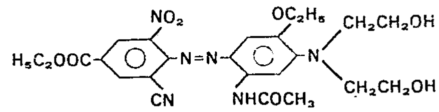

b) 1,0 g des im Abschnitt a) hergestellten Farbstoffs wird in feindispergierter Form in 2000 g Wasser eingerührt. Es wird mit Essigsäure auf einen pH-Wert von 5 bis 6 eingestellt und mit 4,0 g Ammoniumsulfate und 2,0 g eines handelsüblichen Dispergiermittels auf Basis eines Naphthalinsulfonsäure-Formaldehyd-Kondensats versetzt. In die so erhaltene Färbeflotte bringt man 100 g eines Polyestergewebes auf Basis von Polyäthylenglykolterephthalat ein und färbt 1 s bei 130° C.

Nach anschliessendem Spülen, reduktiver Nachbehandlung mit einer 0,2%igen alkalischen Natriumdithionitlösung während 15 min bei 70 bis 80° C, Spülen und Trocknen, erhält man eine farbstarke marineblaue Färbung mit sehr guten coloristischen Eigenschaften, insbesondere einer sehr guten Licht- und Trockenhitzefixierechtheit.

Analog den Beispielen 1 bis 3 lassen sich die erfindungsgemässen Farbstoffe der folgenden Tabelle II herstellen. Sie färben hydrophobe Fasern ebenfalls in vollen orangefarbenen bis blauen Nuance von ausgezeichneten Echtheiten.

*Tabelle II*

Farbstoff der Formel

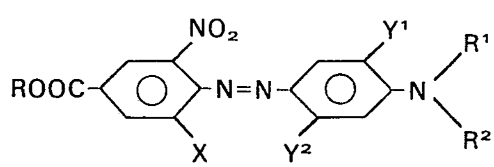 (I)

Tabelle II *(Vortsetzung)*

| Nr. | R | X | $Y^1$ | $Y^2$ | $R^1$ | $R^2$ | Nuance auf Polyester |
|---|---|---|---|---|---|---|---|
| 4 | $C_2H_5$ | Br | H | H | $(CH_2)_2OH$ | $(CH_2)_2OH$ | 1 |
| 5 | $n\text{-}C_3H_7$ | Br | H | H | $(CH_2)_2OH$ | $(CH_2)_2OH$ | 1 |
| 6 | $(CH_2)_2OH$ | Cl | H | H | $(CH_2)_2OH$ | $(CH_2)_2OH$ | 1 |
| 7 | $C_2H_5$ | Cl | H | H | $(CH_2)_2OH$ | $(CH_2)_2CN$ | 2 |
| 8 | $(CH_2)_2OC_2H_5$ | Br | H | H | $(CH_2)_2OH$ | $(CH_2)_2OH$ | 2 |
| 9 | $(CH_2)_2OCH_3$ | Br | H | H | $(CH_2)_2OH$ | $(CH_2)_2OH$ | 3 |
| 10 | $CH_3$ | Br | H | H | $C_2H_5$ | $CH_2CH(OH)CH_2Cl$ | 2 |
| 11 | $C_2H_5$ | CN | H | H | $(CH_2)_2OH$ | $(CH_2)_2CN$ | 1 |
| 12 | $n\text{-}C_3H_7$ | Cl | H | H | $(CH_2)_2O(CH_2)_2OC_2H_5$ | $(CH_2)_2O(CH_2)_2OC_2H_5$ | 1 |
| 13 | $(CH_2)_2OCH_3$ | Br | H | H | $(CH_2)_2OC_6H_5$ | $C_2H_5$ | 1 |
| 14 | $C_2H_5$ | Br | H | $CH_3$ | $(CH_2)_2OH$ | $(CH_2)_2CN$ | 1 |
| 15 | $i\text{-}C_3H_7$ | Cl | H | $CH_3$ | $C_2H_5$ | $(CH_2)_2CN$ | 1 |
| 16 | $(CH_2)_2OCH_3$ | Br | H | $CH_3$ | $(CH_2)_2OH$ | $(CH_2)_2OH$ | 1 |
| 17 | $CH_3$ | Br | H | $CH_3$ | $(CH_2)_2CN$ | $CH_2CH(OH)CH_2OH$ | 1 |
| 18 | $(CH_2)_2OCH_3$ | Br | H | $CH_3$ | $(CH_2)_2CN$ | $(CH_2)_4OCH_3$ | 1 |
| 19 | $(CH_2)_2OC_2H_5$ | Br | H | $CH_3$ | $(CH_2)_2OH$ | $(CH_2)_2OH$ | 2 |
| 20 | $C_2H_5$ | Cl | H | Cl | $(CH_2)_2CN$ | $CH_2CH(OH)CH_2Cl$ | 2 |
| 21 | $CH_3$ | Cl | $OCH_3$ | H | H | $(CH_2)_2CN$ | 2 |
| 22 | $C_2H_5$ | Br | $OCH_3$ | H | H | $CH_2CH(OH)CH_2OC_2H_5$ | 2 |
| 23 | $C_2H_5$ | Br | $CH_3$ | H | H | $(CH_2)_2O(CH_2)_2OH$ | 2 |
| 24 | $CH_3$ | Cl | $CH_3$ | H | H | $(CH_2)_2CN$ | 3 |
| 25 | $(CH_2)_2OC_2H_5$ | Br | $CH_3$ | H | $(CH_2)_2CN$ | $(CH_2)_2OH$ | 2 |
| 26 | $C_2H_5$ | Br | Cl | H | H | $(CH_2)_2CN$ | 3 |
| 27 | $n\text{-}C_3H_7$ | CN | Cl | H | H | $(CH_2)_2CN$ | 2 |
| 28 | $C_2H_5$ | Cl | Cl | H | H | $CH_2CH(OH)CH_2Cl$ | 3 |
| 29 | $CH_3$ | Br | Cl | H | H | $(CH_2)_2OC_2H_5$ | 3 |
| 30 | $C_2H_5$ | CN | Cl | H | H | $CH_2CH(OH)CH_2OH$ | 2 |
| 31 | $C_2H_5$ | Br | H | $NHCOCH_3$ | $(CH_2)_2OH$ | $(CH_2)_2CN$ | 4 |
| 32 | $n\text{-}C_4H_9$ | Br | H | $NHCOCH_3$ | $CH_2CH(OH)CH_2OH$ | $(CH_2)_2CN$ | 4 |
| 33 | $CH_3$ | Br | H | $NHCOCH_3$ | $C_2H_5$ | $C_2H_5$ | 4 |
| 34 | $C_2H_5$ | CN | H | $NHCOCH_3$ | $C_2H_5$ | $C_2H_5$ | 5 |
| 35 | $(CH_2)_2CN$ | Cl | H | $NHC_2H_5$ | $(CH_2)_2OH$ | $(CH_2)_2OH$ | 4 |
| 36 | $(CH_2)_2OC_2H_5$ | Br | H | $NHC_2H_5$ | $(CH_2)_2O(CH_2)_2OCH_3$ | $(CH_2)_2O(CH_2)_2OCH_3$ | 4 |
| 37 | $C_2H_5$ | Br | H | $NHCOCH_2OCH_3$ | $C_2H_5$ | $C_2H_5$ | 4 |
| 38 | $C_2H_5$ | Br | $OCH_3$ | $NHCOCH_3$ | $(CH_2)_2OH$ | $(CH_2)_2OH$ | 5 |
| 39 | $CH_3$ | Cl | $CH_3$ | $NHCOCH_3$ | $(CH_2)_2OH$ | $(CH_2)_2CN$ | 5 |
| 40 | $CH_3$ | CN | $OCH_3$ | $NHCOCH_3$ | $(CH_2)_2OCH_3$ | $(CH_2)_2OCH_3$ | 6 |

Tabelle II *(Fortsetzung)*

| Nr. | R | X | $Y^1$ | $Y^2$ | $R^1$ | $R^2$ | Nuance auf Polyester |
|---|---|---|---|---|---|---|---|
| 41 | $(CH_2)_2OH$ | CN | $OCH_3$ | $NHCOCH_3$ | $(CH_2)_2O(CH_2)_2OH$ | $(CH_2)_2O(CH_2)_2OH$ | 6 |
| 42 | $C_2H_5$ | CN | $OCH_3$ | $NHCOCH_3$ | $(CH_2)_2CN$ | $(CH_2)_2OH$ | 6 |
| 43 | $C_2H_5$ | CN | $OCH_3$ | $NHCOCH_3$ | $(CH_2)_2CN$ | $CH_2CH(OH)CH_2OH$ | 6 |
| 44 | $(CH_2)_2OC_2H_5$ | CN | $OCH_3$ | $NHCOCH_3$ | $i\text{-}C_4H_9$ | $(CH_2)_2OH$ | 6 |
| 45 | $(CH_2)_2OCH_3$ | CN | $OC_2H_5$ | $NHCOCH_3$ | $(CH_2)_2OH$ | $(CH_2)_2OH$ | 6 |
| 46 | $i\text{-}C_4H_9$ | CN | $OC_2H_5$ | $NHCOCH_3$ | $CH_2CH(OH)CH_2Cl$ | $(CH_2)_2OH$ | 6 |
| 47 | $C_2H_5$ | CN | $O(CH_2)_2OCH_3$ | $NHCOCH_3$ | $(CH_2)_2OH$ | $(CH_2)_2OH$ | 6 |
| 48 | $(CH_2)_2OC_2H_5$ | CN | $OC_2H_5$ | $NHCOCH_3$ | $(CH_2)_2OH$ | $(CH_2)_2OH$ | 6 |
| 49 | $[(CH_2)_2O]_2H$ | Br | Cl | H | H | $(CH_2)_2CN$ | 3 |
| 50 | $[(CH_2)_2O]_2H$ | CN | H | H | $(CH_2)_2CN$ | $C_2H_5$ | 2 |
| 51 | $[(CH_2)_2O]_2H$ | CN | $OCH_3$ | $NHCOCH_3$ | $(CH_2)_2CN$ | $(CH_2)_2OH$ | 7 |
| 52 | $[(CH_2)_2O]_2H$ | Br | H | $CH_3$ | $[(CH_2)_2O]_2H$ | $[(CH_2)_2O]_2H$ | 2 |
| 53 | $[(CH_2)_2O]_2H$ | CN | H | H | $(CH_2)_2OH$ | $(CH_2)_2OH$ | 1 |
| 54 | $[(CH_2)_2O]_2H$ | CN | $OC_2H_5$ | $NHCOCH_3$ | $(CH_2)_2OH$ | $(CH_2)_2OH$ | 7 |
| 55 | $[(CH_2)_2O]_2H$ | Cl | H | H | $(CH_2)_2CN$ | $(CH_2)_2OH$ | 2 |
| 56 | $[(CH_2)_2O]_2CH_3$ | CN | H | $CH_3$ | $(CH_2)_2CN$ | $CH_2CH{=}CH_2$ | 1 |
| 57 | $[(CH_2)_2O]_2CH_3$ | Br | H | H | $(CH_2)_2OCH_3$ | $(CH_2)_2OCH_3$ | 2 |
| 58 | $[(CH_2)_2O]_2CH_3$ | CN | H | H | $(CH_2)_2CN$ | $(CH_2)_2CN$ | 2 |
| 59 | $[(CH_2)_2O]_2CH_3$ | CN | $OC_2H_5$ | $NHCOCH_3$ | $(CH_2)_2OH$ | $(CH_2)_2OH$ | 7 |
| 60 | $[(CH_2)_2O]_2C_2H_5$ | CN | Cl | H | H | $CH_2CH(OH)CH_2OH$ | 2 |
| 61 | $[(CH_2)_2O]_2C_2H_5$ | CN | H | $NHCOCH_3$ | $C_2H_5$ | $C_2H_5$ | 5 |
| 62 | $[(CH_2)_2O]_2C_2H_5$ | Br | H | $OCH_3$ | $C_2H_5$ | $C_2H_5$ | 4 |
| 63 | $[(CH_2)_2O]_2C_2H_5$ | Cl | H | H | $C_6H_{11}$ | $C_2H_5$ | 2 |
| 64 | $[(CH_2)_2O]_2C_2H_5$ | CN | $OCH_3$ | $NHCOCH_3$ | $(CH_2)_2OC_2H_5$ | $(CH_2)_2OC_2H_5$ | 7 |
| 65 | $[(CH_2)_2O]_2C_2H_5$ | CN | H | H | $(CH_2)_2CN$ | $CH_2CH{=}CH_2$ | 2 |
| 66 | $[(CH_2)_2O]_3H$ | CN | $OC_2H_5$ | $NHCOCH_3$ | $[(CH_2)_2O]_2H$ | $[(CH_2)_2O]_2H$ | 7 |
| 67 | $[(CH_2)_2O]_3CH_3$ | Br | H | H | $CH_2CH{=}CH_2$ | $CH_2CH{=}CH_2$ | 2 |
| 68 | $[(CH_2)_2O]_3CH_3$ | CN | H | H | $(CH_2)_2CN$ | $C_2H_5$ | 1 |
| 69 | $[(CH_2)_2O]_3CH_3$ | CN | H | H | $(CH_2)_2OH$ | $C_2H_5$ | 1 |
| 70 | $[(CH_2)_2O]_3CH_3$ | CN | $OCH_3$ | $NHCOCH_3$ | $(CH_2)_2CN$ | $C_2H_5$ | 7 |
| 71 | $[(CH_2)_2O]_3CH_3$ | CN | H | H | $CH_3$ | $CH_3$ | 1 |
| 72 | $[(CH_2)_2O]_3C_2H_5$ | CN | $OC_2H_5$ | $NHCOCH_3$ | $(CH_2)_2CN$ | $(CH_2)_2OH$ | 7 |
| 73 | $[(CH_2)_2O]_3C_2H_5$ | Br | H | H | $(CH_2)_2CN$ | $(CH_2)_2CN$ | 3 |
| 74 | $[(CH_2)_2O]_3C_2H_5$ | CN | H | H | $(CH_2)_2OC_6H_5$ | $C_2H_5$ | 1 |
| 75 | $[(CH_2)_2O]_3C_4H_9$ | Cl | H | $CH_3$ | $(CH_2)_2CN$ | $(CH_2)_2OH$ | 1 |
| 76 | $[(CH_2)_2O]_4H$ | CN | H | Cl | $(CH_2)_2OH$ | $(CH_2)_2OH$ | 1 |
| 77 | $[(CH_2)_2O]_4H$ | Br | H | H | $(CH_2)_2CN$ | $n\text{-}C_4H_9$ | 2 |

Tabelle II *(Fortsetzung)*

| Nr. | R | X | $Y^1$ | $Y^2$ | $R^1$ | $R^2$ | Nuance auf Polyester |
|---|---|---|---|---|---|---|---|
| 78 | $[(CH_2)_2O]_4CH_3$ | CN | H | H | $C_5H_9$ | $(CH_2)_2CN$ | 1 |
| 79 | $[(CH_2)_2O]_4CH_3$ | CN | $OCH_3$ | $NHCOCH_3$ | $C_2H_5$ | $C_2H_5$ | 7 |
| 80 | $[(CH_2)_2O]_4C_2H_5$ | Br | H | $CH_3$ | $C_2H_5$ | $(CH_2)_2OH$ | 1 |
| 81 | $[(CH_2)_2O]_5H$ | CN | $OC_2H_5$ | $NHCOCH_3$ | $CH_2CH(OH)CH_2OCH_3$ | $CH_2CH(OH)CH_2OCH_3$ | 7 |
| 82 | $[(CH_2)_2O]_5H$ | CN | H | H | $CH_3$ | $(CH_2)_2CN$ | 1 |
| 83 | $[(CH_2)_2O]_6H$ | Cl | H | H | $CH_3$ | $(CH_2)_2OH$ | 2 |
| 84 | $[(CH_2)_2O]_5C_2H_5$ | CN | Cl | H | H | $(CH_2)_2CN$ | 2 |
| 85 | $(CH_2)_4O(CH_2)_2OH$ | Br | H | H | $n\text{-}C_4H_9$ | $n\text{-}C_4H_9$ | 2 |
| 86 | $(CH_2)_4O[(CH_2)_2O]_2H$ | CN | H | $CH_3$ | $(CH_2)_2CN$ | $(CH_2)_2OH$ | 4 |
| 87 | $[(CH_2)_4O]_2H$ | CN | $OCH_3$ | $NHCOCH_3$ | $(CH_2)_2CN$ | $(CH_2)_4OH$ | 7 |
| 88 | $(CH_2)_3O(CH_2)_2OH$ | Br | H | $NHCOCH_3$ | $CH_2CH{=}CH_2$ | $(CH_2)_2CN$ | 5 |
| 89 | $(CH_2)_3O[(CH_2)_2O]_2H$ | Br | H | H | $C_2H_5$ | $CH_2CH{=}CH_2$ | 2 |
| 90 | $(CH_2)_6OH$ | CN | H | H | $C_2H_5$ | $(CH_2)_2CN$ | 1 |
| 91 | $(CH_2)_6O(CH_2)_2OH$ | Cl | H | $CH_3$ | $(CH_2)_2OH$ | $(CH_2)_2OH$ | 1 |

In der letzten Spalte der Tabelle II bedeutet:

1 rot
2 scharlach
3 orange
4 rubin
5 violett
6 marine
7 blau

Die Farbstoffe des Ausführungsbeispiels 2 und des Tabellenbeispiels 4 besitzen hinsichtlich ihrer Eigenschaften im alkalischen Ätzdruck besonders günstige Eigenschaften.

## Patentansprüche

1. Von Carbonsäure- und Sulfonsäure-Gruppen freie Monoazofarbstoffe der Formel I

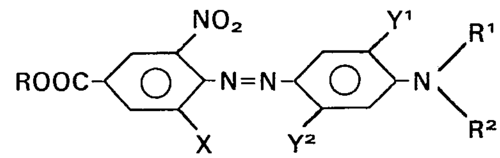

(I)

worin

R Alkyl mit 1 bis 4 C-Atomen, Hydroxyethyl, Chlorethyl, Bromethyl oder Cyanethyl, Alkyl mit 3 bis 12 C-Atomen, das durch 1 bis 5 Sauerstoffatome unterbrochen ist und durch Hydroxy substituiert sein kann,

X Chlor, Brom oder Cyan,

$Y^1$ unter der Bedingung, dass $Y^2$ für Wasserstoff oder $-NHCOR^3$ steht, Wasserstoff, Methoxy, Ethoxy, Methyl, Ethyl, Chlor oder Brom oder unter der Bedingung, dass $Y^2$ für $-NHCOR^3$ steht, auch Hyroxyethoxy, Methoxyethoxy oder Ethoxyethoxy, $Y^2$ $-NHCOR^3$ oder unter der Bedingung, dass $Y^1$ für Wasserstoff steht, Wasserstoff, Methoxy, Ethoxy, Methyl, Ethyl, Chlor oder Brom,

$R^1$ Alkyl mit 1 bis 4 C-Atomen, das durch Chlor, Brom, Cyan, Hydroxy oder Phenoxy monosubstituiert oder durch Hydroxy oder durch Hydroxy und Chlor oder Brom oder durch Phenoxy und Hydroxy disubstituiert sein kann, Alkenyl mit 3 bis 4 C-Atomen, Cycloalkyl mit 5 oder 6 C-Atomen, Alkyl mit 3 bis 8 C-Atomen, dessen Kohlenstoffketten durch 1 bis 3 Sauerstoffatome unterbrochen ist und durch Hydroxy, Chlor oder Brom ein- oder mehrfach substituiert sein kann, und für den Fall, dass $Y^2$ ungleich $-NHCOR^3$ ist, auch Wasserstoff,

$R^2$ Alkyl mit 1 bis 4 C-Atomen,.das durch Chlor, Brom, Cyan Phenoxy oder Hydroxy monosubstituiert oder durch Hydroxy oder durch Hydroxy und Chlor oder Brom oder durch Phenoxy und Hydroxy disubstituiert sein kann, Alkenyl mit 3 bis 4 C-Atomen oder Alkyl mit 3 bis 8 C-Atomen dessen Kohlenstoffkette durch 1 bis 3 Sauerstoffatome unterbrochen ist und durch Hydroxy, Chlor oder Brom ein- oder mehrfach substituiert sein kann,

$R^3$ Alkyl mit 1 bis 2 C-Atomen, das gegebenenfalls durch Hydroxy, Methoxy, oder Ethoxy substituiert ist,

bedeuten.

2. Farbstoffe nach Anspruch 1, dadurch gekennzeichnet, dass X Brom oder Cyan ist.

3. Farbstoffe nach einem der Ansprüche 1 oder 2, dadurch gekennzeichnet, dass $Y^2$ = Wasserstoff, Methyl oder $-NHCOR^3$ ist, wobei $R^3$ Methyl, Ethyl, Hydroxyethyl, Methoxyethyl oder Ethoxyethyl bedeutet.

4. Farbstoffe nach einem oder mehreren der Ansprüche 1 bis 3, dadurch gekennzeichnet, dass R Alkyl mit 1 bis 3 C-Atomen, Methoxyethyl oder Ethoxyethyl ist.

5. Farbstoffe nach einem oder mehreren der Ansprüche 1 bis 4, dadurch gekennzeichnet, dass $R^1$ und/oder $R^2$ mindstens eine OH-Gruppe enthalten.

6. Farbstoffe nach einem oder mehreren der Ansprüche 1 bis 5, dadurch gekennzeichnet, dass $R^1$ und/oder $R^2$ Hydroxyethyl oder 2,3-Dihydroxypropyl beudeuten.

7. Farbstoffe nach einem oder mehreren der Ansprüche 1 bis 6, dadurch gekennzeichnet, dass $Y^1$ Methoxy, Ethoxy, Hydroxyethoxy, Methoxyethoxy oder Ethoxyethoxy und $R^2$ $-NHCOR^3$ bedeuten.

8. Farbstoffe nach einem oder mehreren der Ansprüche 1 bis 6, dadurch gekennzeichnet, dass X Cyan und $Y^1$ Methoxy, Ethoxy, Hydroxyethoxy, Methoxyethoxy, Ethoxyethoxy und $Y^2$ $-NHCOR^3$ bedeuten.

9. Verfahren zur Herstellung von Farbstoffen der Ansprüche 1 bis 8, dadurch gekennzeichnet, dass man Amine der Formel II

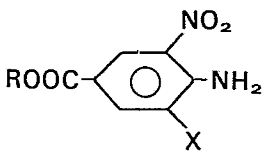

(II)

diazotiert und auf Amine der Formel III

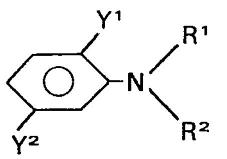

(III)

kuppelt, wobei R, X, $Y^1$, $Y^2$, $R^1$ und $R^2$ die in den Ansprüchen 1 bis 8 angegebenen Bedeutungen haben, oder dass man zur Herstellung von Farbstoffen der in Anspruch 1 angegebenen Formel I, in der X für Cyan steht, in Farbstoffen der Formel I, in der X für Chlor oder Brom, vorzugsweise für Brom, steht, Chlor oder Brom gegen Cyan austauscht.

10. Verwendung der Farbstoffe der Ansprüche 1 bis 8 und deren Mischungen mit Farbstoffen anderer Farbstoffklassen zum alkalischen Ätzdruck von hydrophoben Fasermaterialien und Mischungen aus hochmolekularen Polyestern und Cellulose.

## Revendications

1. Colorants mono-azoïques dépourvus de radicaux carboxy et sulfo, qui répondent à la formule I

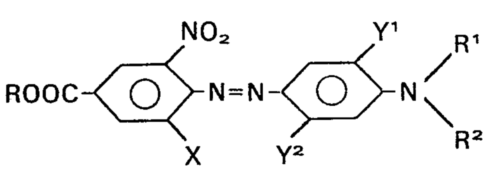

(I)

dans laquelle

R représente un alkyle contenant de 1 à 4 atomes de carbone, un hydroxyéthyle, un chloréthyle, un brométhyle, un cyanéthyle ou un alkyle en $C_3$-$C_{12}$ qui est interrompu par 1 à 5 atomes d'oxygène et qui peut porter un hydroxy,

X représente le chlore, le brome ou un cyano,

$Y^1$ représente, dans le cas où $Y^2$ est l'hydrogène ou un radical $-NHCOR^3$, l'hydrogène, un radical méthoxy, éthoxy, méthyle ou éthyle, ou un atome de chlore ou de brome, ou, dans le cas où $Y^2$ est un radical $-NHCOR^3$, $Y^1$ peut aussi être un radical hydroxyéthoxy, méthoxyéthoxy ou éthoxyéthoxy,

$Y^2$ représente un radical $-NHCOR^3$ ou, dans le cas où $Y^1$ représente l'hydrogène, peut également représenter l'hydrogène, un radical méthoxy, éthoxy, méthyle ou éthyle, ou un atome de chlore ou de brome,

$R^1$ représente un alkyle en $C_1$-$C_4$ qui peut porter 1 substituant pris dans l'ensemble constitué par le chlore, le brome et les radicaux cyano, hydroxy et phénoxy, ou 2 substituants, en l'espèce deux hydroxy, ou un hydroxy et un chlore ou un brome, ou un phénoxy et un hydroxy, ou représente un alcényle en $C_3$ ou $C_4$, un cycloalkyle en $C_5$ ou $C_6$, un alkyle en $C_3$-$C_8$ dont la chaîne carbonnée est interrompue par 1 à 3 atomes d'oxygène et peut porter un ou plusieurs substituants pris dans l'ensemble constitué par le groupe hydroxy et les atomes de chlore et de brome et, dans le cas où $Y^2$ n'est pas un radical $-NHCOR^3$, $R^1$ peut aussi représenter l'hydrogène,

$R^2$ représente un alkyle en $C_1$-$C_4$ qui peut porter un substituant pris dans l'ensemble constitué par le chlore, le brome et les radicaux cyano, phénoxy et hydroxy, ou deux substituants, en l'espèce deux hydroxy, ou un hydroxy et un chlore ou un brome, ou un phénoxy et un hydroxy, ou représente un alcényle en $C_3$ ou $C_4$ ou un alkyle en $C_3$ à $C_8$ dont la chaîne carbonée est interrompue par 1 à 3 atomes d'oxygène et peut porter un ou plusieurs substituants pris dans l'ensemble constitué par le groupe hydroxy, le chlore et le brome, et

$R^3$ représente un alkyle en $C_1$ ou $C_2$ qui porte éventuellement un radical hydroxy, méthoxy ou éthoxy.

2. Colorants selon la revendication 1, caractérisés en ce que X représente le brome ou un radical cyano.

3. Colorants selon l'une des revendications 1 ou 2, caractérisés en ce que $Y^2$ représente l'hydrogène, un radical méthyle ou un radical $-NHCOR^3$ dans lequel $R^3$ désigne un radical méthyle, éthyle, hydroxyéthyle, méthoxyéthyle ou éthoxyéthyle.

4. Colorants selon l'une des revendications 1 à 3, caractérisés en ce que R représente un radical alkyle contenant de 1 à 3 atomes de carbone ou un radical méthoxyéthyle ou éthoxyéthyle.

5. Colorants selon l'une des revendications 1 à 4, caractérisés en ce que $R^1$ et/ou $R^2$ contiennent au moins un radical $-OH$.

6. Colorants selon l'une des revendications 1 à 5, caractérisés en ce que $R^1$ et/ou $R^2$ représentent un radical hydroxyéthyle ou dihydroxy-2,3 propyle.

7. Colorants selon l'une des revendications 1 à 6, caractérisés en ce que $Y^1$ représente un radical méthoxy, éthoxy, hydroxyéthoxy, méthoxyéthoxy ou éthoxyéthoxy et $Y^2$ représente un radical $-NHCOR^3$.

8. Colorants selon l'une des revendications 1 à 6, caractérisés en ce que X représente un radical cyano, $Y^1$ représente un radical méthoxy, éthoxy, hydroxyéthoxy, méthoxyéthoxy ou éthoxyéthoxy et $Y^2$ représente un radical $-NHCOR^3$.

9. Procédé de préparation de colorants selon l'une des revendications 1 à 8, caractérisé en ce qu'on diazote des amines de formule II:

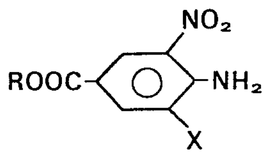

(II)

et on copule le diazoïque avec une amine de formule III

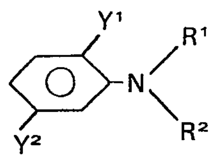

(III)

formules dans lesquelles R, X, $Y^1$, $Y^2$, $R^1$ et $R^2$ ont les significations qui ont été données dans les revendications 1 à 8, ou, pour préparer des colorants répondant à la formule I de la revendication 1 dans lesquels X représente un radical cyano, on échange, dans des colorants de formule I dans lesquels X représente un atome de chlore ou de brome, de préférence de brome, le chlore ou le brome contre un radical cyano.

10. Applications des colorants selon l'une des revendications 1 à 8, et de leurs mélanges avec des colorants appartenant à d'autres catégories, à l'impression avec rongeage alcalin de matières fibreuses hydrophobes et de mélanges de polyesters macromoléculaires et de cellulose.

## Claims

1. Monoazo dyestuffs which are free from carboxylic acid and sulphonic acid groups and have the formula I

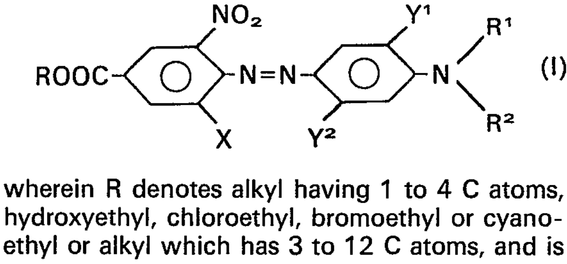

(I)

wherein R denotes alkyl having 1 to 4 C atoms, hydroxyethyl, chloroethyl, bromoethyl or cyanoethyl or alkyl which has 3 to 12 C atoms, and is interrupted by 1 to 5 oxygen atoms and can be substituted by hydroxyl, X denotes chlorine, bromine or cyano, $Y^1$ denotes hydrogen, methoxy, ethoxy, methyl, ethyl, chlorine or bromine, subject to the proviso that $Y^2$ represents hydrogen or $-NHCOR^3$, or also denotes hydroxyethoxy, methoxyethoxy or ethoxyethoxy, subject to the proviso that $Y^2$ represents $-NHCOR^3$, $Y^2$ denotes $-NHCOR^3$ or, subject to the proviso that $Y^1$ represents hydrogen, also denotes hydrogen, methoxy, ethoxy, methyl, ethyl, chlorine or bromine, $R^1$ denotes alkyl which has 1 to 4 C atoms and which can be monosubstituted by chlorine, bromine, cyano, hydroxyl or phenoxy or can be disubstituted by hydroxyl or by hydroxyl and chlorine or bromine or phenoxy and hydroxyl, or denotes alkenyl having 3 to 4 C atoms, cycloalkyl having 5 or 6 C atoms, alkyl which has 3 to 8 C atoms and in which the carbon chain is interrupted by 1 to 3 oxygen atoms and can be monosubstituted or polysubstituted by hydroxyl, chlorine or bromine, and, in the event that $Y^2$ is different from $-NHCOR^3$, also denotes hydrogen, $R^2$ denotes alkyl which has 1 to 4 C atoms and which can be monosubstituted by chlorine, bromine, cyano, phenoxy or hydroxyl or can be disubstituted by hydroxyl or by hydroxyl and chlorine or bromine or by phenoxy and hydroxyl, or denotes alkenyl having 3 to 4 C atoms or alkyl which has 3 to 8 C atoms and in which the carbon chain is interrupted by 1 to 3 oxygen atoms and can be monosubstituted or polysubstituted by hydroxyl, chlorine or bromine, and $R^3$ denotes alkyl which has 1 to 2 C atoms and which is optionally substituted by hydroxyl, methoxy or ethoxy.

2. Dyestuffs according to Claim 1, characterised in that X represents bromine or cyano.

3. Dyestuffs according to Claim 1 or 2, characterised in that $Y^2$ denotes hydrogen, methyl or $-NHCOR^3$, $R^3$ standing for methyl, ethyl, hydroxyethyl, methoxyethyl or ethoxyethyl.

4. Dyestuffs according to one or several of Claims 1 to 3, characterised in that R denotes alkyl having 1 to 3 C atoms, methoxyethyl or ethoxyethyl.

5. Dyestuffs according to one or several of Claims 1 to 4, characterised in that $R^1$ and/or $R^2$ contain at least one OH group.

6. Dyestuffs according to one or several of Claims 1 to 5, characterised in that $R^1$ and/or $R^2$ denote hydroxyethyl or 2,3-dihydroxypropyl.

7. Dyestuffs according to one or several of Claims 1 to 6, characterised in that $Y^1$ denotes methoxy, ethoxy, hydroxyethoxy, methoxyethoxy or ethoxyethoxy and $Y^2$ denotes $-NHCOR^3$.

8. Dyestuffs according to one or several of Claims 1 to 6, characterised in that X is cyano and $Y^1$ is methoxy, ethoxy, hydroxyethoxy, methoxyethoxy or ethoxyethoxy and $Y^2$ is $-NHCOR^3$.

9. Process for the manufacture of dyestuffs of Claims 1 to 8, characterised in that amines of the formula II

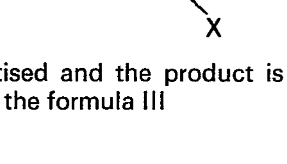

(II)

are diazotised and the product is coupled with amines of the formula III

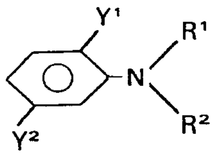

(III)

R, X, $Y^1$, $Y^2$, $R^1$ and $R^2$ having the meanings indicated in Claims 1 to 8, or that, for the manufacture of dyestuffs of the formula I indicated in Claim 1, in which X represents cyano, in dyestuffs of the formula I in which X represents chlorine or bromine, preferably bromine, chlorine or bromine is replaced by cyano.

10. Use of the dyestuffs of Claims 1 to 8 and mixtures thereof with dyestuffs of other classes of dyestuff for alkaline discharge, printing of water-repellent fibre materials and mixtures of high-molecular polyesters and cellulose.